# EUROPEAN PATENT APPLICATION

(11) **EP 4 797 643 A1**
(43) Date of publication of application: **26.08.2026**
(21) Application number: 24890570.5
(22) Date of filing: 08.11.2024
(51) Int. Cl.: H04L 41/16

(54) **MODEL TRAINING METHOD AND DEVICE**

(30) Priority: 15.11.2023 CN 202311531431
(71) Applicant: HUAWEI TECHNOLOGIES CO., LTD., Shenzhen 518129 (CN)
(72) Inventor: MA, Chuan, Shenzhen, Guangdong 518129 (CN); ZHOU, Yu, Shenzhen, Guangdong 518129 (CN); CAO, Longyu, Shenzhen, Guangdong 518129 (CN); LI, Xianming, Shenzhen, Guangdong 518129 (CN); HAO, Jinping, Shenzhen, Guangdong 518129 (CN)
(74) Representative: Gill Jennings & Every LLP
(86) International application number: PCT/CN2024/130683
(87) International publication number: WO 2025/103214

(57) **Abstract**

A model training method is provided. The method may be applied to a field of radio access networks. The method includes: receiving model training requirement information sent by a second functional entity, where the model training requirement information includes at least one of the following information: layer quantity information of model training, a maximum value of time used for model training, a data volume used for model training, a maximum value of the data volume used for model training, a minimum value of the data volume used for model training, or a performance threshold for model training; and performing model training based on the model training requirement information. According to the foregoing method, a first functional entity can perform model training based on the model training requirement information in a targeted manner. In this way, a success rate of model training can be improved, thereby reducing waste of resources during model training.

## Description

This application claims priority to Chinese Patent Application No. 202311531431.6, filed with the China National Intellectual Property Administration on November 15, 2023 and entitled "MODEL TRAINING METHOD AND APPARATUS", which is incorporated herein by reference in its entirety.

### TECHNICAL FIELD

This application relates to a field of radio access networks, and in particular, to a model training method and apparatus.

### BACKGROUND

Artificial intelligence (artificial intelligence, AI) is a technology that mimics human cognition, learning and reasoning capabilities. Machine learning (machine learning, ML) is an important technical means in the AI field. A core idea of the machine learning is to learn a large amount of known data to obtain a relationship between the data, and finally predict and analyze unknown data. Common AI or ML technologies may include: supervised learning, unsupervised learning, semi-supervised learning, reinforcement learning, and the like. In a radio access network (radio access network, RAN) field, AI or ML is also widely applied, for example, service prediction, resource scheduling, and network management performed based on the AI or ML technologies.

However, when the AI or ML technologies are applied in the RAN field, due to limitations of objective reasons such as costs, radio environments, and application requirements of access network devices, a volume of data that can be collected by the access network devices and computing resources and storage resources that can be obtained by the access network devices are very limited. As a result, model training failures (for example, model performance does not meet requirements or model training times out) and waste of computing resources may occur.

### SUMMARY

This application provides a model training method and apparatus, so that a success rate of model training can be improved, thereby reducing waste of resources during model training.

According to a first aspect, a model training method is provided. The method is applied to a first functional entity. The method includes: receiving model training requirement information sent by a second functional entity, where the model training requirement information includes at least one of the following information: layer quantity information of model training, a maximum value of time used for model training, a data volume used for model training, a maximum value of the data volume used for model training, a minimum value of the data volume used for model training, or a performance threshold for model training; and performing model training based on the model training requirement information.

Optionally, the first functional entity may be a mobile intelligent function (mobile intelligent function, MIF). Further, the first functional entity may be a centralized MIF.

Optionally, the second functional entity may be an access network device or an MIF. Further, when the second functional entity is the MIF, the MIF may be a distributed MIF.

Optionally, the first functional entity and/or the second functional entity may be located in a radio access network.

In this embodiment of this application, the first functional entity may receive the model training requirement information sent by the second functional entity, and perform model training based on the model training requirement information. In this manner, the first functional entity can perform model training in a targeted manner, so that a success rate of model training can be improved, thereby reducing waste of resources during model training.

With reference to the first aspect, in some implementations of the first aspect, the method further includes: sending first information to the second functional entity, where the first information indicates information about a trained model, or the first information indicates a model training failure.

In this embodiment of this application, after the first functional entity performs model training based on the model training requirement information, the first functional entity may notify the second functional entity of a model training result by using the first information. In this manner, it can be ensured that the second functional entity learns of the model training result in a timely manner, thereby enhancing collaboration between the first functional entity and the second functional entity.

With reference to the first aspect, in some implementations of the first aspect, the first information indicates the information about the trained model, and the first information includes a first model.

The first model may be understood as a model obtained by the first functional entity through training based on the model training requirement information.

With reference to the first aspect, in some implementations of the first aspect, performing model training based on the model training requirement information includes: receiving a first dataset sent by the second functional entity; and training the second model based on the first dataset and the model training requirement information, to obtain the first model.

Optionally, the second model may also be referred to as an initial model. The second model may be a model whose parameter is an initial value, or may be a model obtained through training based on another dataset.

In this embodiment of this application, the first functional entity may train the second model based on the first dataset and the model training requirement information that are sent by the second functional entity, and obtain the first model. In this way, the first model can be obtained more efficiently, and a success rate of training the second model can be improved.

With reference to the first aspect, in some implementations of the first aspect, the first information indicates a model training failure, the first information includes a failure cause value, and the failure cause value indicates at least one of the following content: insufficient computing power, insufficient training samples, or unsatisfactory performance of the trained model.

Optionally, the failure cause value may indicate a failure cause in a form of a number. For example, when the failure cause value is 01, it may indicate that computing power of the first functional entity is insufficient when the first functional entity performs model training; when the failure cause value is 10, it may indicate that training samples of the first functional entity are insufficient when the first functional entity performs model training; or when the failure cause value is 11, it may indicate that performance of the first model does not meet a requirement.

Optionally, that the performance of the trained model does not meet the requirement may be, for example, that accuracy is less than a threshold, or that a mean squared error is greater than a threshold.

In this embodiment of this application, after the first functional entity fails to perform model training, the first information may include the failure cause value. In this way, the second functional entity can quickly determine, based on the failure cause value, a cause of the model training failure, and adjust a model training policy.

With reference to the first aspect, in some implementations of the first aspect, before performing model training based on the model training requirement information, the method further includes: sending model training requirement information confirmation information to the second functional entity, where the model training requirement confirmation information indicates that the first functional entity confirms the model training requirement information.

Alternatively, the first functional entity may send model training requirement change information to the second functional entity, and perform model training by using changed model training requirement information.

According to a second aspect, a model training method is provided. The method is applied to a second functional entity. The method includes: determining model training requirement information, where the model training requirement information includes at least one of the following information: layer quantity information of model training, a maximum value of time used for model training, a data volume used for model training, a maximum value of the data volume used for model training, a minimum value of the data volume used for model training, or a performance threshold of model training; and sending the model training requirement information to a first functional entity.

In this embodiment of this application, the second functional entity may determine the model training requirement information, and send the model training requirement information to the first functional entity, so that the first functional entity can perform model training based on the model training requirement information. In this manner, the first functional entity can perform model training in a targeted manner, so that a success rate of model training can be improved, thereby reducing waste of resources during model training.

With reference to the second aspect, in some implementations of the second aspect, the method further includes: receiving first information sent by the first functional entity, where the first information indicates information about a trained model, or the first information indicates a model training failure.

In this embodiment of this application, the second functional entity can learn of a model training result based on the first information. In this manner, it can be ensured that the second functional entity learns of the model training result in a timely manner, thereby enhancing collaboration between the first functional entity and the second functional entity.

With reference to the second aspect, in some implementations of the second aspect, the first information indicates the information about the trained model, and the first information includes a first model; before receiving the first information sent by the first functional entity, the method further includes: obtaining a first dataset; and sending the first dataset to the first functional entity; and the method further includes: training the first model based on the first dataset, to obtain a third model.

Alternatively, the second functional entity may collect a second dataset, and train the first model based on the second dataset, to obtain the third model, where data content of the first dataset may be different from that of the second dataset.

Optionally, in this implementation, the second functional entity may be a distributed MIF.

In this embodiment of this application, the second functional entity may collect the first dataset, and send the first dataset to the first functional entity, so that the first functional entity performs model training to obtain the first model. In addition, after the first functional entity sends the first model obtained through training to the second functional entity, the second functional entity may train the first model again based on the first dataset, and obtain the third model. In this manner, collaboration between the first functional entity and the second functional entity in a model training process is enhanced, thereby further improving inference performance of the model obtained through training.

With reference to the second aspect, in some implementations of the second aspect, the first information indicates a model training failure, the first information includes a failure cause value, and the failure cause value indicates at least one of the following content: insufficient computing power, insufficient training samples, or unsatisfactory performance of the trained model.

In this embodiment of this application, after the first functional entity fails to perform model training, the first information may include the failure cause value. In this way, the second functional entity can quickly determine, based on the failure cause value, a cause of the model training failure, and adjust a model training policy.

With reference to the second aspect, in some implementations of the second aspect, receiving model training requirement information confirmation information sent by the first functional entity, where the model training requirement confirmation information that the first functional entity confirms the model training requirement information.

According to a third aspect, a model training method is provided. The method is applied to a first functional entity. The method includes:

determining model training requirement information, where the model training requirement information includes at least one of the following information: a model identifier, model structure information, layer quantity information of model training, a maximum value of time used for model training, a data volume used for model training, a maximum value of the data volume used for model training, a minimum value of the data volume used for model training, or a performance threshold for model training; and sending the model training requirement information to a second functional entity.

Optionally, the first functional entity may be an MIF. Further, the first functional entity may be a centralized MIF.

Optionally, the second functional entity may be an MIF. Further, the second functional entity may be a distributed MIF.

Optionally, the first functional entity and/or the second functional entity may be located in a radio access network.

In this embodiment of this application, the first functional entity may determine the model training requirement information, and send the model training requirement information to the second functional entity, so that the second functional entity can perform model training based on the model training requirement information. In this manner, the second functional entity can perform model training in a targeted manner, so that a success rate of model training can be improved, thereby reducing waste of resources during model training.

With reference to the third aspect, in some implementations of the third aspect, the method further includes: receiving first information sent by the second functional entity, where the first information indicates information about a trained model, or the first information indicates a model training failure.

In this embodiment of this application, the first functional entity can receive the first information sent by the second functional entity, to learn of a result of model training performed by the second functional entity. In this manner, it can be ensured that the first functional entity learns of the model training result in a timely manner, thereby enhancing collaboration between the first functional entity and the second functional entity.

With reference to the third aspect, in some implementations of the third aspect, the first information indicates the information about the trained model, and the first information includes a first model.

The first model may be understood as a model obtained by the second functional entity through training based on the model training requirement information.

With reference to the third aspect, in some implementations of the third aspect, before receiving the first information sent by the second functional entity, the method further includes: receiving a first dataset sent by the second functional entity; performing model training based on the first dataset, to obtain a second model, where the first model is obtained by training the second model based on the model training requirement information; and sending the second model to the second functional entity.

Specifically, the first dataset may be collected by the second functional entity, and data in the first dataset may be labeled data, or may be unlabeled data. The labeled data may include the data itself and a corresponding label. For example, if the first dataset used for AI positioning is {(CIR1, TOD1), (CIR2, TOA2)}, in each piece of data, a channel impulse response (channel impulse response, CIR) is the data itself, and a time of arrival (time of arrival, TOA) is the label corresponding to the data. The unlabeled data may include only the data itself, and does not include a label corresponding to the data. For example, if the dataset used for AI channel compression is {CSI1, CSI2}, each piece of data includes only the data itself, namely, channel state information (channel state information, CSI).

In this embodiment of this application, the first functional entity may perform model training based on the first dataset to obtain the second model, and send the second model to the second functional entity, so that the second functional entity trains the second model based on the model training requirement information. In this way, collaboration between the first functional entity and the second functional entity in model training is enhanced, and model training accuracy can be improved.

With reference to the third aspect, in some implementations of the third aspect, the first information indicates a model training failure, the first information includes a failure cause value, and the failure cause value indicates at least one of the following content: insufficient computing power, insufficient training samples, or unsatisfactory performance of the trained model.

In this embodiment of this application, after the second functional entity fails to perform model training, the first information may include the failure cause value. In this way, the first functional entity can quickly determine, based on the failure cause value, a cause of the model training failure, and adjust a model training policy.

With reference to the third aspect, in some implementations of the third aspect, before determining the model training requirement information, the method further includes: receiving model training capability information sent by the second functional entity, where the model training capability information indicates at least one of the following content corresponding to the second functional entity: computing power headroom, memory headroom, video memory headroom, or a video memory bandwidth; and determining the model training requirement information includes: determining the model training requirement information based on the model training capability information.

In this embodiment of this application, the first functional entity may determine the model training requirement information based on the model training capability information sent by the second functional entity. In this way, the model training requirement information determined by the first functional entity can be more close to an actual situation in which the second functional entity performs model training, thereby further improving model training efficiency of the second functional entity.

According to a fourth aspect, a model training method is provided. The method is applied to a second functional entity. The method includes: receiving model training requirement information sent by a first functional entity, where the model training requirement information includes at least one of the following information: a model identifier, model structure information, layer quantity information of model training, a maximum value of time used for model training, a data volume used for model training, a maximum value of the data volume used for model training, a minimum value of the data volume used for model training, or a performance threshold for model training; and performing model training based on the model training requirement information.

In this embodiment of this application, the second functional entity may perform model training based on the model training requirement information sent by the first functional entity. In this manner, the second functional entity can perform model training in a targeted manner, so that a success rate of model training can be improved, thereby reducing waste of resources during model training.

With reference to the fourth aspect, in some implementations of the fourth aspect, the method further includes: sending first information to the first functional entity, where the first information indicates information about a trained model, or the first information indicates a model training failure.

In this embodiment of this application, the second functional entity can send the first information to the first functional entity, so that the first functional entity can learn of a model training result of the second functional entity in a timely manner, thereby enhancing collaboration between the first functional entity and the second functional entity.

With reference to the fourth aspect, in some implementations of the fourth aspect, the first information indicates the information about the trained model, and the first information includes a first model.

The first model may be understood as a model obtained by the second functional entity through training based on the model training requirement information.

With reference to the fourth aspect, in some implementations of the fourth aspect, performing model training based on the model training requirement information includes: obtaining a first dataset; sending the first dataset to the first functional entity; receiving a second model sent by the first functional entity, where the second model is obtained through training based on the first dataset; and training the second model based on the first dataset and the model training requirement information, to obtain the first model.

In this embodiment of this application, the second functional entity trains the second model based on the first dataset to obtain the first model. In this way, collaboration between the first functional entity and the second functional entity in model training is enhanced, and model training accuracy can be improved.

With reference to the fourth aspect, in some implementations of the fourth aspect, the first information indicates a model training failure, the first information includes a failure cause value, and the failure cause value indicates at least one of the following content: insufficient computing power, insufficient training samples, or unsatisfactory performance of the trained model.

In this embodiment of this application, after the second functional entity fails to perform model training, the first information may include the failure cause value. In this way, the first functional entity can quickly determine, based on the failure cause value, a cause of the model training failure, and adjust a model training policy.

With reference to the fourth aspect, in some implementations of the fourth aspect, before receiving the model training requirement information, the method includes: sending model training capability information to the first functional entity, where the model training capability information indicates at least one of the following content corresponding to the second functional entity: computing power headroom, memory headroom, video memory headroom, or a video memory bandwidth.

In this embodiment of this application, the second functional entity may send the model training capability information to the first functional entity, so that the first functional entity determines the model training requirement information based on the model training capability information. In this way, the model training requirement information determined by the first functional entity can be more close to an actual situation in which the second functional entity performs model training, and model training efficiency of the second functional entity can be further improved.

According to a fifth aspect, a model training method is provided. The method is applied to a first functional entity. The method includes: sending model training requirement information to a plurality of second functional entities, where the model training requirement information includes at least one of the following content: a maximum value of time for a single round of model training, a data volume used for model training, a maximum value of the data volume used for model training, a minimum value of the data volume used for model training, or a performance threshold for model training; receiving a plurality of first model training parameters sent by the plurality of second functional entities, where the plurality of first model training parameters are obtained through training based on a plurality of first models; determining a global model training parameter based on the plurality of model training parameters; and sending the global model training parameter to the plurality of second functional entities.

The model training method may be a distributed training method, to be specific, the plurality of second functional entities may separately perform model training based on the model training requirement sent by the first functional entity, to obtain a plurality of model training results. Finally, the plurality of model training results may be summarized to obtain a trained model.

Optionally, the first functional entity may be an MIF. Further, the first functional entity may be a centralized MIF.

Optionally, the second functional entity may be an MIF. Further, the second functional entity may be a distributed MIF.

Optionally, the first functional entity and/or the second functional entity may be located in a radio access network.

Optionally, the first model training parameter may be a gradient value, and the global model training parameter may be understood as a parameter used for training on an entire dataset in a model training process. The parameter affects a entire model learning process.

In this embodiment of this application, the first functional entity may send the model training requirement information to the plurality of second functional entities. After receiving the first model training parameters sent by the plurality of second functional entities, the first functional entity can determine the global training parameter based on the plurality of first model training parameters, and send the global training parameter to the plurality of second functional entities, so that the plurality of second functional entities can perform model training based on the global training parameter. In this manner, collaboration between the first functional entity and the plurality of second functional entities can be improved, and a success rate of model training can be improved. In addition, model training efficiency can be further improved by using the foregoing distributed training method.

With reference to the fifth aspect, in some implementations of the fifth aspect, before sending the model training requirement information to the plurality of second functional entities, the method further includes: receiving a plurality of pieces of model training capability information sent by the plurality of second functional entities, where the plurality of pieces of model training capability information indicate at least one of the following content corresponding to the plurality of second functional entities: an estimated value of time for a single round of training, computing power headroom, memory headroom, video memory headroom, or a video memory bandwidth; and sending the model training requirement information to the plurality of second functional entities includes: sending the model training requirement information to the plurality of second functional entities based on the plurality of pieces of model training capability information.

In this embodiment of this application, the first functional entity may determine the model training requirement information based on the plurality of pieces of model training capability information sent by the plurality of second functional entities. In this way, the model training requirement information determined by the first functional entity can be more close to an actual situation in which the plurality of second functional entities perform model training, thereby further improving model training efficiency of the second functional entity.

With reference to the fifth aspect, in some implementations of the fifth aspect, before sending the model training requirement information to the plurality of second functional entities, the method includes: sending the plurality of first models to the plurality of second functional entities.

According to a sixth aspect, a model training method is provided. The method is applied to a second functional entity. The method includes: receiving model training requirement information sent by a first functional entity, where the model training requirement information includes at least one of the following content: a maximum value of time for a single round of model training, a data volume used for model training, a maximum value of the data volume used for model training, a minimum value of the data volume used for model training, or a performance threshold for model training; training a first model based on the model training requirement information, to obtain a first model training parameter; and sending the first model training parameter to the first functional entity.

In this embodiment of this application, the second functional entity may train the first model based on the model training requirement information sent by the first functional entity, to obtain the first model training parameter, and send the first model training parameter to the second functional entity, so that the first functional entity determines a global training parameter based on a plurality of first model training parameters. In this manner, collaboration between the first functional entity and the second functional entity can be improved, thereby improving accuracy of inference performed by a final model. In addition, model training efficiency can be further improved by using the foregoing distributed training method.

With reference to the sixth aspect, in some implementations of the sixth aspect, the method further includes: sending model training capability information to the first functional entity, where the model training capability information indicates at least one of the following content corresponding to the second functional entity: an estimated value of time for a single round of training, computing power headroom, memory headroom, video memory headroom, or a video memory bandwidth.

In this embodiment of this application, the second functional entity may send the model training requirement information to the first functional entity, so that the model training requirement information determined by the first functional entity can be more close to an actual situation in which the second functional entity performs model training, thereby further improving model training efficiency of the second functional entity.

With reference to the sixth aspect, in some implementations of the sixth aspect, before receiving the model training requirement information sent by the first functional entity, the method further includes: receiving the first model sent by the first functional entity.

According to a seventh aspect, a model training apparatus is provided. The apparatus is used in a first functional entity. The apparatus includes a transceiver unit and a processing unit. The transceiver unit is configured to receive model training requirement information sent by a second functional entity, where the model training requirement information includes at least one of the following information: layer quantity information of model training, a maximum value of time used for model training, a data volume used for model training, a maximum value of the data volume used for model training, a minimum value of the data volume used for model training, or a performance threshold for model training. The processing unit is configured to perform model training based on the model training requirement information.

With reference to the seventh aspect, in some implementations of the seventh aspect, the transceiver unit is further configured to send first information to the second functional entity, where the first information indicates information about a trained model, or the first information indicates a model training failure.

With reference to the seventh aspect, in some implementations of the seventh aspect, the first information indicates the information about the trained model, and the first information includes a first model.

With reference to the seventh aspect, in some implementations of the seventh aspect, the transceiver unit is specifically configured to receive a first dataset sent by the second functional entity. The processing unit is further configured to train the second model based on the first dataset and the model training requirement information, to obtain the first model.

With reference to the seventh aspect, in some implementations of the seventh aspect, the first information indicates a model training failure, the first information includes a failure cause value, and the failure cause value indicates at least one of the following content: insufficient computing power, insufficient training samples, or unsatisfactory performance of the trained model.

With reference to the seventh aspect, in some implementations of the seventh aspect, the transceiver unit is further configured to send model training requirement information confirmation information to the second functional entity, where the model training requirement confirmation information indicates that the first functional entity confirms the model training requirement information.

According to an eighth aspect, a model training apparatus is provided. The apparatus is used in a second functional entity. The apparatus includes a transceiver unit and a processing unit. The processing unit is configured to determine model training requirement information, where the model training requirement information includes at least one of the following information: layer quantity information of model training, a maximum value of time used for model training, a data volume used for model training, a maximum value of the data volume used for model training, a minimum value of the data volume used for model training, or a performance threshold for model training. The transceiver unit is configured to send the model training requirement information to a first functional entity.

With reference to the eighth aspect, in some implementations of the eighth aspect, the transceiver unit is further configured to receive first information sent by the first functional entity, where the first information indicates information about a trained model, or the first information indicates a model training failure.

With reference to the eighth aspect, in some implementations of the eighth aspect, the first information indicates the information about the trained model, and the first information includes a first model; and the processing unit is specifically configured to: obtain a first dataset; send the first dataset to the first functional entity; and train the first model based on the first dataset, to obtain a third model.

With reference to the eighth aspect, in some implementations of the eighth aspect, the first information indicates a model training failure, the first information includes a failure cause value, and the failure cause value indicates at least one of the following content: insufficient computing power, insufficient training samples, or unsatisfactory performance of the trained model.

With reference to the eighth aspect, in some implementations of the eighth aspect, the transceiver unit is further configured to receive model training requirement information confirmation information sent by the first functional entity, where the model training requirement confirmation information indicates that the first functional entity confirms the model training requirement information.

According to a ninth aspect, a model training apparatus is provided. The apparatus is used in a first functional entity. The apparatus includes a transceiver unit and a processing unit. The processing unit is configured to determine model training requirement information, where the model training requirement information includes at least one of the following information: a model identifier, model structure information, layer quantity information of model training, a maximum value of time used for model training, a data volume used for model training, a maximum value of the data volume used for model training, a minimum value of the data volume used for model training, or a performance threshold for model training.

The transceiver unit is configured to send the model training requirement information to a second functional entity.

With reference to the ninth aspect, in some implementations of the ninth aspect, the transceiver unit is further configured to receive first information sent by the second functional entity, where the first information indicates information about a trained model, or the first information indicates a model training failure.

With reference to the ninth aspect, in some implementations of the ninth aspect, the first information indicates the information about the trained model, and the first information includes a first model.

With reference to the ninth aspect, in some implementations of the ninth aspect, the transceiver unit is further configured to receive a first dataset sent by the second functional entity. The processing unit is further configured to perform model training based on the first dataset, to obtain a second model, where the first model is obtained by training the second model based on the model training requirement information. The transceiver unit is further configured to send the second model to the second functional entity.

With reference to the ninth aspect, in some implementations of the ninth aspect, the first information indicates a model training failure, the first information includes a failure cause value, and the failure cause value indicates at least one of the following content: insufficient computing power, insufficient training samples, or unsatisfactory performance of the trained model.

With reference to the ninth aspect, in some implementations of the ninth aspect, the transceiver unit is further configured to receive model training capability information sent by the second functional entity, where the model training capability information indicates at least one of the following content corresponding to the second functional entity: computing power headroom, memory headroom, video memory headroom, or a video memory bandwidth. The processing unit is specifically configured to determine the model training requirement information based on the model training capability information.

According to a tenth aspect, a model training apparatus is provided. The apparatus is used in a second functional entity. The apparatus includes a transceiver unit and a processing unit. The transceiver unit is configured to receive model training requirement information sent by a first functional entity, where the model training requirement information includes at least one of the following information: a model identifier, model structure information, layer quantity information of model training, a maximum value of time used for model training, a data volume used for model training, a maximum value of the data volume used for model training, a minimum value of the data volume used for model training, or a performance threshold for model training. The processing unit is configured to perform model training based on the model training requirement information.

With reference to the tenth aspect, in some implementations of the tenth aspect, the transceiver unit is further configured to send first information to the first functional entity, where the first information indicates information about a trained model, or the first information indicates a model training failure.

With reference to the tenth aspect, in some implementations of the tenth aspect, the first information indicates the information about the trained model, and the first information includes a first model.

With reference to the tenth aspect, in some implementations of the tenth aspect, the processing unit is further configured to obtain a first dataset. The transceiver unit is further configured to: send the first dataset to the first functional entity; and receive a second model sent by the first functional entity, where the second model is obtained through training based on the first dataset. The processing unit is further configured to train the second model based on the first dataset and the model training requirement information, to obtain the first model.

With reference to the tenth aspect, in some implementations of the tenth aspect, the first information indicates a model training failure, the first information includes a failure cause value, and the failure cause value indicates at least one of the following content: insufficient computing power, insufficient training samples, or unsatisfactory performance of the trained model.

With reference to the tenth aspect, in some implementations of the tenth aspect, the transceiver unit is further configured to send model training capability information to the first functional entity, where the model training capability information indicates at least one of the following content corresponding to the second functional entity: computing power headroom, memory headroom, video memory headroom, or a video memory bandwidth.

According to an eleventh aspect, a model training apparatus is provided. The apparatus is used in a first functional entity. The apparatus includes a transceiver unit and a processing unit. The transceiver unit is configured to: send model training requirement information to a plurality of second functional entities, where the model training requirement information includes at least one of the following content: a maximum value of time for a single round of model training, a data volume used for model training, a maximum value of the data volume used for model training, a minimum value of the data volume used for model training, or a performance threshold for model training; and receive a plurality of first model training parameters sent by the plurality of second functional entities, where the plurality of first model training parameters are obtained through training based on a plurality of first models. The processing unit is configured to determine a global model training parameter based on the plurality of first model training parameters. The transceiver unit is further configured to send the global model training parameter to the plurality of second functional entities.

With reference to the eleventh aspect, in some implementations of the eleventh aspect, the transceiver unit is further configured to receive a plurality of pieces of model training capability information sent by the plurality of second functional entities, where the plurality of pieces of model training capability information indicate at least one of the following content corresponding to the plurality of second functional entities: an estimated value of time for a single round of training, computing power headroom, memory headroom, video memory headroom, or a video memory bandwidth. The processing unit is further configured to send the model training requirement information to the plurality of second functional entities based on the plurality of pieces of model training capability information.

With reference to the eleventh aspect, in some implementations of the eleventh aspect, the transceiver unit is further configured to send the plurality of first models to the plurality of second functional entities.

According to a twelfth aspect, a model training apparatus is provided. The apparatus is used in a second functional entity. The apparatus includes a transceiver unit and a processing unit. The transceiver unit is configured to receive model training requirement information sent by a first functional entity, where the model training requirement information includes at least one of the following content: a maximum value of time for a single round of model training, a data volume used for model training, a maximum value of the data volume used for model training, a minimum value of the data volume used for model training, or a performance threshold for model training. The processing unit is configured to train a first model based on the model training requirement information, to obtain a first model training parameter. The transceiver unit is further configured to send the first model training parameter to the first functional entity.

With reference to the twelfth aspect, in some implementations of the twelfth aspect, the transceiver unit is further configured to send model training capability information to the first functional entity, where the model training capability information indicates at least one of the following content corresponding to the second functional entity: an estimated value of time for a single round of training, computing power headroom, memory headroom, video memory headroom, or a video memory bandwidth.

With reference to the twelfth aspect, in some implementations of the twelfth aspect, the transceiver unit is further configured to receive the first model sent by the first functional entity.

According to a thirteenth aspect, a model training apparatus is provided. The model training apparatus may be a first apparatus, or may be a one-to-one corresponding module or unit (for example, a chip, a chip system, or a circuit) in the first apparatus for performing any method/operation/action in the first aspect to the sixth aspect.

With reference to the thirteenth aspect, in some implementations of the thirteenth aspect, the first apparatus may be an access network device, a centralized MIF, a distributed MIF, or another form.

According to a fourteenth aspect, a model training apparatus is provided, including a memory and at least one processor, where the at least one processor is coupled to the memory, and is configured to read and execute an instruction in the memory, so that the apparatus implements the method in any one of the implementations of the first aspect to the sixth aspect.

According to a fifteenth aspect, a chip is provided. The chip includes a circuit. The circuit is configured to perform the method according to any one of the implementations of the first aspect to the sixth aspect.

According to a sixteenth aspect, a computer-readable storage medium is provided. The computer-readable storage medium stores program code. When the computer program code is run on a computer, the computer is enabled to perform the method according to any one of the implementations of the first aspect to the sixth aspect.

According to a seventeenth aspect, a computer program product is provided. The computer program product includes a computer program. When the computer program is run, a computer is enabled to perform the method according to any one of the implementations of the first aspect to the sixth aspect.

According to an eighteenth aspect, a system is provided, where the system includes a first functional entity and a second functional entity, the first functional entity is configured to perform the method in any one of the first aspect, the third aspect, or the fifth aspect, and the second functional entity is configured to perform the method in any one of the second aspect, the fourth aspect, or the sixth aspect.

### BRIEF DESCRIPTION OF DRAWINGS

FIG. 1 is a system architecture to which a model training method is applicable according to an embodiment of this application;
FIG. 2 is a schematic functional diagram of a mobile intelligent function according to an embodiment of this application;
FIG. 3 shows a model training method according to an embodiment of this application;
FIG. 4 shows another model training method according to an embodiment of this application.
FIG. 5 shows another model training method according to an embodiment of this application.
FIG. 6 shows another model training method according to an embodiment of this application.
FIG. 7 shows another model training method according to an embodiment of this application.
FIG. 8 shows another model training method according to an embodiment of this application.
FIG. 9 shows another model training method according to an embodiment of this application.
FIG. 10 shows a model training apparatus according to an embodiment of this application;
FIG. 11 shows another model training apparatus according to an embodiment of this application.

### DESCRIPTION OF EMBODIMENTS

The following describes technical solutions of this application with reference to accompanying drawings.

In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In this application, at least one means one or more, and a plurality of means two or more. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. In embodiments of this application, use of the prefix words, for example, ordinal numbers, used to distinguish between the described objects does not constitute a limitation on the described objects. For descriptions of the described objects, refer to the descriptions of the context in the claims or embodiments. The use of such prefix words should not constitute a redundant limitation.

The technical solutions in embodiments of this application may be applied to various communication systems such as a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future 6th generation (6th generation, 6G) system.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (Session Initiation Protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (Wideband Code Division Multiple Access, WCDMA) system, may be an evolved NodeB (evolutional NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a future 6G network, a network device in a future evolved PLMN network, or the like. This is not limited in embodiments of this application.

The following describes technical problems to be resolved in this application and technical solutions used in this application.

AI is a technology that mimics human cognitive, learning, and inference capabilities. ML is an important technical means in the AI field. Its core idea is to learn a large amount of known data to obtain the relationship between data, and finally predict and analyze unknown data. Common AI or ML technologies may include: supervised learning, unsupervised learning, semi-supervised learning, reinforcement learning, and the like. In the RAN field, AI or ML is also widely applied, for example, service prediction, resource scheduling, and network management performed based on an AI or ML technology.

However, when the AI or ML technologies are applied in the RAN field, due to limitations of objective reasons such as costs, radio environments, and application requirements of access network devices, a volume of data that can be collected by the access network devices and computing resources and storage resources that can be obtained by the access network devices are very limited. As a result, model training failures (for example, model performance does not meet requirements or model training times out) and waste of computing resources may occur.

This application provides a model training method and apparatus, to improve a success rate of model training and avoid waste of computing resources.

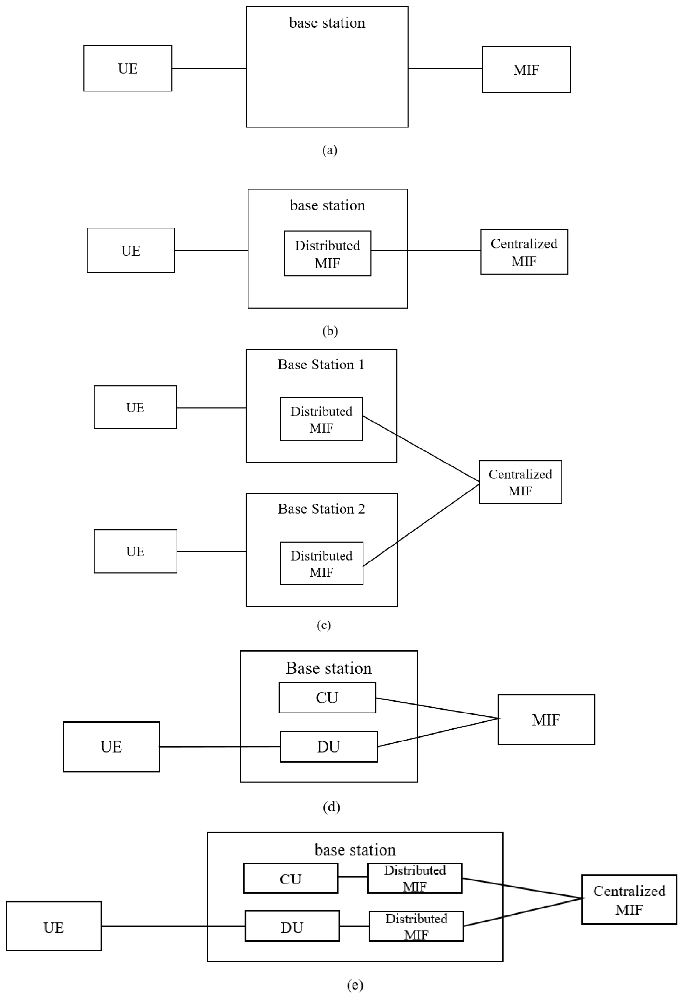

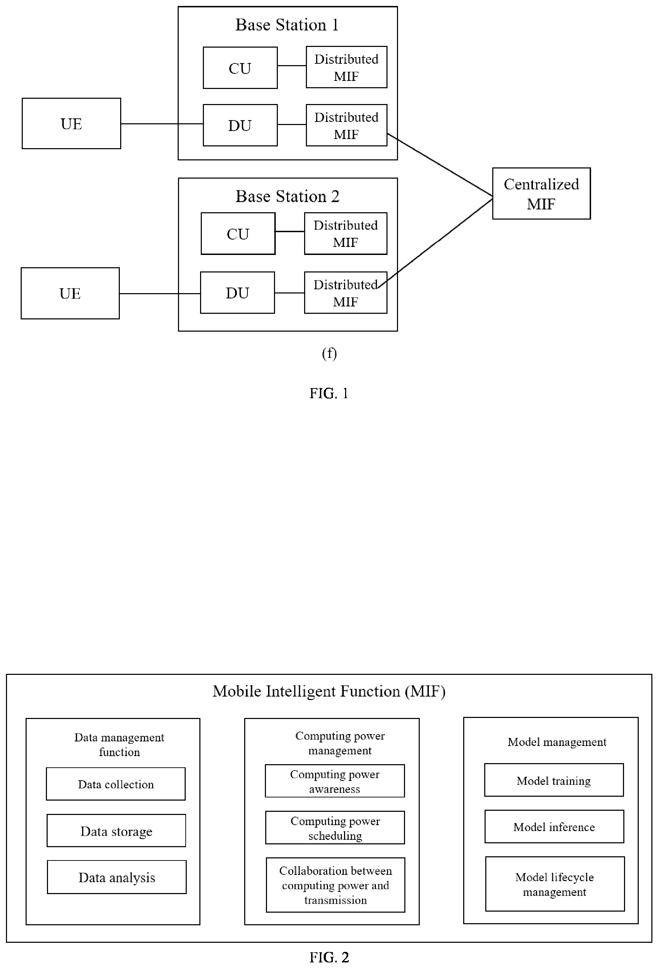

FIG. 1 is a system architecture to which a model training method according to an embodiment of this application is applicable.

As shown in (a) to (f) in FIG. 1, the system architecture may include a base station, UE, and a mobile intelligence function (mobile intelligent function, MIF). As shown in FIG. 2, the MIF may be responsible for AI or ML functions of the base station, including a data management function, a computing power management function, and a model management function. The data management function may include data collection, data storage, and data analysis. The computing power management function may include computing power sensing, computing power scheduling, and computing and transmission collaboration. The model management function may include model training, model inference, and model life cycle management.

Optionally, a form of the MIF implementation may be a base station, a network element independent of the base station, a network function independent of the base station, a submodule in the base station, or a sub-function in the base station.

For example, the MIF may be an independent unit, as shown in (a) in FIG. 1; or the MIF may be divided into two units: a centralized MIF and a distributed MIF, as shown in (b) and (c) in FIG. 1. For centralized AI, the centralized MIF may train an initial model, and the distributed MIF may update the model. For distributed AI, the centralized MIF may be responsible for model division and global training, and the distributed MIF may be responsible for local model training. It should be understood that the centralized MIF and the distributed MIF may jointly complete functions of the MIF. The MIF may be divided into the centralized MIF and the distributed MIF from a logical perspective, or may be divided from a physical structure perspective. How to divide the functions is not limited in this application.

For (a) to (c) in FIG. 1, if the base station uses a split architecture, a corresponding system architecture may be respectively shown in (d) to (e) in FIG. 1. The split architecture may be understood as that the base station is divided into two parts: a central unit (centralized unit, CU) and a distributed unit (distributed unit, DU). The CU is responsible for a higher-layer radio protocol function, and the DU is responsible for a lower-layer radio protocol function.

It should be understood that, in the embodiments of this application, the base station, the network device, and the access network device may be a same concept, and may be used interchangeably.

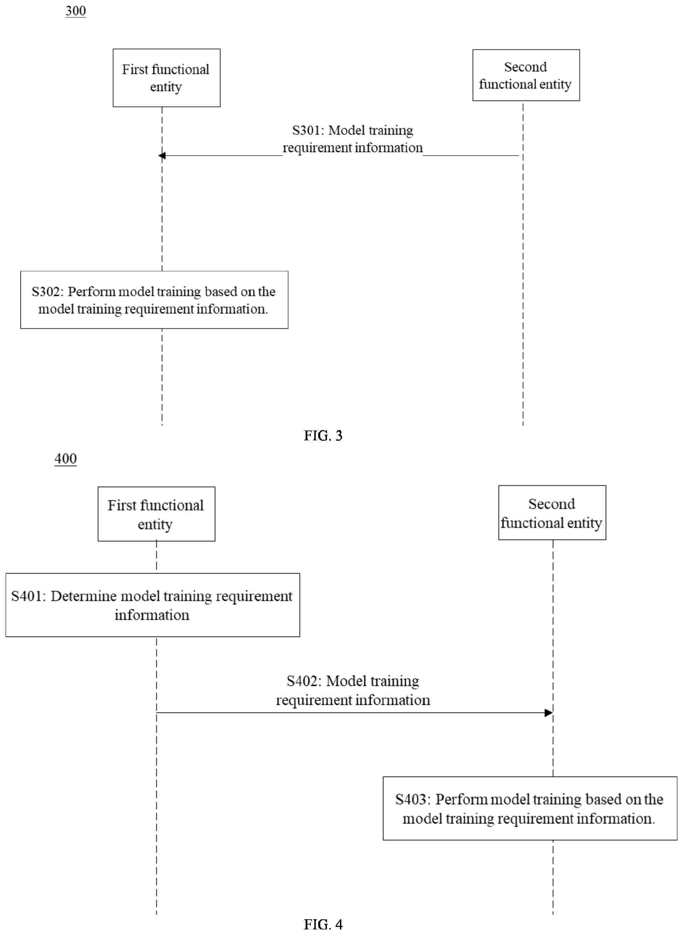

FIG. 3 shows a model training method according to an embodiment of this application. The method 300 may include step S301 to step S302.

S301. A first functional entity receives model training requirement information sent by a second functional entity.

The model requirement information may include at least one piece of the following information: layer quantity information of model training, a maximum value of time used for model training, a data volume used for model training, a maximum value of a data volume used for model training, a minimum value of a data volume used for model training, or a performance threshold for model training. Specific meanings and examples of the information are described in detail in method 500 and the method 600, and details are not described herein again.

Optionally, the first functional entity may be a mobile intelligent function, and further, the first functional entity may be a centralized MIF.

Optionally, the second functional entity may be an access network device or an MIF. Further, when the second functional entity is the MIF, the MIF may be a distributed MIF.

Optionally, the first functional entity and/or the second functional entity may be located in a radio access network.

In an embodiment, before step S301, the method 300 may further include: determining, by the second functional entity, model training requirement information.

S302. The first functional entity performs model training based on the model training requirement information.

In this embodiment of this application, the first functional entity may receive the model training requirement information sent by the second functional entity, and perform model training based on the model training requirement information. In this manner, the first functional entity can perform model training in a targeted manner, so that a success rate of model training can be improved, thereby reducing waste of resources during model training.

It should be understood that, in this application, the model training requirement information may also be referred to as model training configuration information, joint training configuration information, or configuration information.

After performing model training, the first functional entity may notify the second functional entity of a result of the model training.

In an embodiment, after step S302, the first functional entity may send first information to the second functional entity, where the first information indicates trained model information, or the first information indicates a model training failure. In this way, it can be ensured that the second functional entity learns the training result of the model in time, thereby enhancing collaboration between the first functional entity and the second functional entity.

Optionally, when the first information indicates the trained model information, the first information may include a first model, and the first model may be understood as a model obtained by the first functional entity through training based on the model training requirement information.

Optionally, when the first information indicates the trained model information, the first information may further include a first model identifier, and the first model identifier may be an integer (for example, 0001) or a character string (for example, model A).

In an embodiment, before step S302, the first functional entity may receive the first dataset sent by the second functional entity. In step S302, the first functional entity may train the second model based on the first dataset and the model training requirement information, to obtain the first model. In this way, the first model can be obtained more efficiently, and a success rate of training the second model can be improved.

The second model may also be referred to as an initial model. The second model may be a model whose parameter is an initial value, or may be a model obtained through training based on another dataset.

Optionally, before sending the first dataset, the second functional entity may first collect the first dataset.

Specifically, the data in the first dataset may be labeled data, or may be unlabeled data. The labeled data may include the data itself and a corresponding label. For example, if the first dataset used for AI positioning is {(CIR1, TOD1), (CIR2, TOA2)}, in each piece of data, CIR is the data, and TOA is a label corresponding to the data. The unlabeled data may include only the data itself, and does not include a label corresponding to the data. For example, if the dataset used for AI channel compression is {CSI1, CSI2}, each piece of data includes only the data itself, that is, CSI.

In an embodiment, when the first information indicates that the model training fails, the first information may include a failure cause value, and the failure cause value may include at least one of the following content: insufficient computing power, insufficient training samples, or a trained model that does not meet a requirement. In this way, the second functional entity can quickly determine, based on the failure cause value, the cause of the model training failure, and adjust the model training policy.

The insufficient computing power may be understood as insufficient computing power when the first functional entity performs model training, and the insufficient training samples may be understood as insufficient data volume or samples when the first functional entity performs model training, or the model performance after training does not meet a requirement. For example, the insufficient computing power may be that accuracy is lower than a threshold, or a mean squared error is higher than a threshold.

Optionally, the failure cause value may indicate a failure cause in a form of a number. For example, when the failure cause value is 01, it may indicate that computing power of the first functional entity is insufficient; when the failure cause value is 10, it may indicate that training samples used by the first functional entity to perform model training are insufficient; and when the failure cause value is 11, it may indicate that performance of the first model does not meet a requirement.

Optionally, the correspondence between the failure cause value and the failure cause may be indicated by using a mapping relationship, and the second functional entity may determine the failure cause based on the failure cause value and the mapping relationship.

For example, the foregoing mapping relationship may be represented by using Table 1. To be specific, after receiving the failure cause value, the second functional entity may determine, according to the mapping relationship in Table 1, the cause of the model training failure of the first functional entity.

**Table 1**

| Failure cause value | Failure cause |
|---|---|
| 01 | Insufficient computing power |
| 10 | Insufficient training samples |
| 11 | The model performance does not meet requirements. |

Before performing model training based on the model training requirement information, the first functional entity may send the model training requirement information confirmation information or the model training requirement information change information to the second functional entity, so as to better complete training.

For example, when the model training requirement information includes the data volume used for model training, and a value of the data volume used for model training is 1000, if the first functional entity considers that model training can be successfully completed according to the model training quantity requirement, the first functional entity sends the model training requirement information acknowledgment information to the second functional entity. If the first functional entity considers that model training cannot be successfully completed according to the model training quantity requirement, but the data volume should be adjusted to 2000, the first functional entity may send training requirement information change information to the second functional entity, and instruct, in the information, to adjust the data volume to 2000.

The first functional entity and the second functional entity may further complete model training through collaboration.

In an embodiment, after receiving the first model, the second functional entity may train the first model according to the first dataset, to obtain a third model, and apply the third model to perform inference. In this manner, collaboration between the first functional entity and the second functional entity in a model training process is enhanced, thereby further improving inference performance of the model obtained through training.

Alternatively, the second functional entity may collect a second dataset, and train the first model based on the second dataset, to obtain the third model, where data content of the first dataset may be different from that of the second dataset.

FIG. 4 shows a model training method according to an embodiment of this application. The method 400 may include steps S401 to S403.

S401. A first functional entity determines model training requirement information.

The model training requirement information includes at least one piece of information of the following content: a model identifier, structure information of a model, layer quantity information of model training, a maximum value of time used for model training, a data volume used for model training, a maximum value of a data volume used for model training, a minimum value of a data volume used for model training, or a performance threshold for model training. Specific meanings and examples of the information are described in detail in method 800, and details are not described herein again.

Optionally, the first functional entity may be an MIF. Further, the first functional entity may be a centralized MIF.

Optionally, the second functional entity may be an MIF. Further, the second functional entity may be a distributed MIF.

Optionally, the first functional entity and/or the second functional entity may be located in a radio access network.

In an embodiment, before step S401, the first functional entity may receive model training capability information sent by the second functional entity, where the model training capability information may be used to indicate at least one of the following content corresponding to the second functional entity: computing power headroom, memory headroom, video memory headroom, or video memory bandwidth. Specific meanings and examples of the information are described in detail in method 800, and details are not described herein again. In step S401, the first functional entity may determine the model training requirement information according to the model training capability information. In this way, the model training requirement information determined by the first functional entity can be closer to an actual situation in which the second functional entity performs model training, thereby further improving model training efficiency of the second functional entity.

S402. The first functional entity sends the model training requirement information to the second functional entity.

S403. The second functional entity performs model training based on the model training requirement information.

In this embodiment of this application, the first functional entity may determine the model training requirement information, and send the model training requirement information to the second functional entity, so that the second functional entity can perform model training based on the model training requirement information. In this manner, the second functional entity can perform model training in a targeted manner, so that a success rate of model training can be improved, thereby reducing waste of resources during model training.

After performing model training, the second functional entity may notify the first functional entity of a result of the model training.

In an embodiment, after step S403, the second functional entity may send first information to the first functional entity, where the first information indicates trained model information, or the first information indicates a model training failure. In this way, it can be ensured that the first functional entity learns of the training result of the model in time, thereby enhancing collaboration between the first functional entity and the second functional entity.

Optionally, when the first information indicates the trained model information, the first information may include a first model, and the first model may be understood as a model obtained by the second functional entity through training based on the model training requirement information.

Optionally, when the first information indicates the trained model information, the first information may further include a first model identifier, and the first model identifier may be an integer (for example, 0001) or a character string (for example, model A).

In an embodiment, before step S403, the first functional entity may receive the first dataset sent by the second functional entity, and the first functional entity may further perform model training according to the first dataset to obtain the second model, and send the second model to the second functional entity. In step S403, the second functional entity may train the second model according to the first dataset and the model training requirement information, to obtain the first model. In this way, collaboration between the first functional entity and the second functional entity in model training is enhanced, and model training accuracy can be improved.

In an embodiment, when the first information indicates a model training failure, the first information may include a failure cause value, and the failure cause value may include at least one of the following content: insufficient computing power, insufficient training samples, or a trained model that does not meet a requirement. In this way, the first functional entity can quickly determine, based on the failure cause value, the cause of the model training failure, and adjust the model training policy.

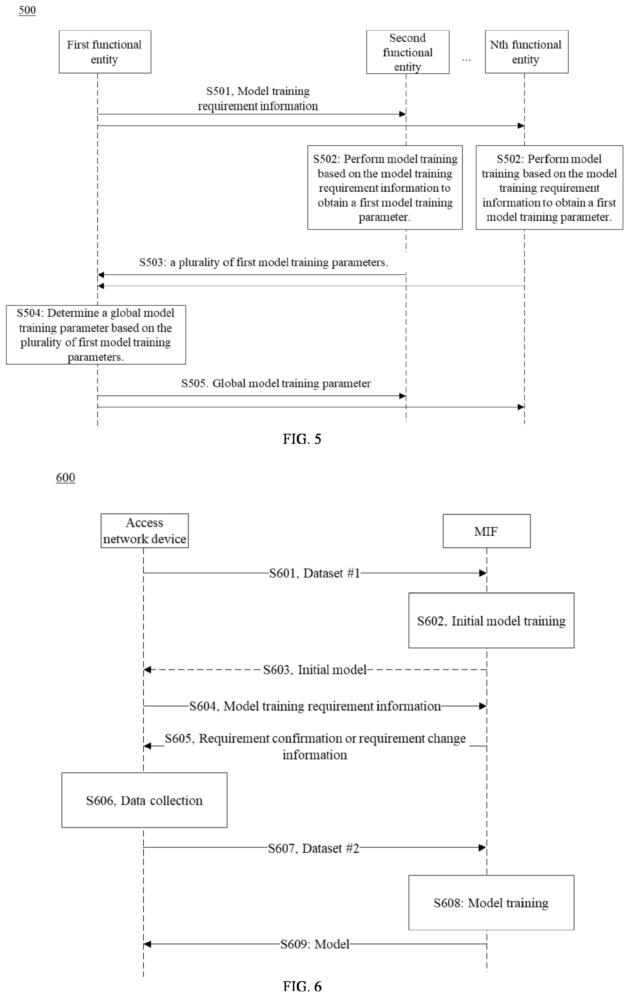

FIG. 5 shows a model training method according to an embodiment of this application. The method 500 may include step S501 to step S505.

S501. A first functional entity sends model training requirement information to multiple second functional entities.

The model training requirement information includes at least one piece of the following content: a maximum value of time for a single round of model training, a data volume used for model training, a maximum value of the data volume used for model training, a minimum value of the data volume used for model training, or a performance threshold for model training. Specific meanings and examples of the information are described in detail in method 900, and details are not described herein again.

Optionally, the first functional entity may be an MIF. Further, the first functional entity may be a centralized MIF.

Optionally, the second functional entity may be an MIF. Further, the second functional entity may be a distributed MIF.

Optionally, the first functional entity and/or the second functional entity may be located in a radio access network.

In an embodiment, before step S501, the method 500 further includes: receiving, by the first functional entity, multiple pieces of model training capability information sent by the multiple second functional entities, where the multiple pieces of model training capability information indicates at least one of the following corresponding to the multiple second functional entities: a estimated value of time for a single round of training, a computing power headroom, a memory headroom, a video memory headroom, or video memory bandwidth. In step S501, the first functional entity may send model training requirement information to the multiple second functional entities according to the multiple pieces of model training capability information. In this way, the model training requirement information determined by the first functional entity can be closer to an actual situation in which the plurality of second functional entities perform model training, thereby further improving model training efficiency of the plurality of second functional entities.

Optionally, corresponding parameters in the plurality of pieces of model training capability information may be the same or may be different. This is not limited in this application.

In an embodiment, before step S501, the method 500 further includes: sending, by the first functional entity, the multiple first models to the multiple second functional entities.

Optionally, the plurality of first models may be the same model, or may be different models. This is not limited in this application.

S502. The plurality of second functional entities perform model training based on the model training requirement information, to obtain a plurality of first model training parameters.

The first model training parameter may be a training parameter obtained when the plurality of second functional entities train the first model.

Optionally, the first model training parameter may be a gradient value.

S503. The plurality of second functional entities send a plurality of first model training parameters to the first functional entity.

S504. The first functional entity determines a global model training parameter based on the plurality of first model training parameters.

Optionally, the global training parameter may be understood as a parameter used for training on an entire dataset in a model training process. These parameters affect the entire model learning process.

S505. The first functional entity sends the global model training parameter to the multiple second functional entities.

The plurality of second functional entities may perform model training according to the global model training parameter, to obtain a plurality of model training results.

Optionally, the plurality of model training results may be a plurality of trained submodels.

It should be understood that the method 500 may be a distributed training method, that is, the plurality of second functional entities separately perform model training according to the model training requirement sent by the first functional entity, to obtain a plurality of model training results, and finally, the plurality of model training results may be summarized to obtain a trained model.

In this embodiment of this application, the first functional entity may send the model training requirement information to the plurality of second functional entities. After receiving the first model training parameters sent by the plurality of second functional entities, the first functional entity can determine the global training parameter based on the plurality of first model training parameters, and send the global training parameter to the plurality of second functional entities, so that the plurality of second functional entities can perform model training based on the global training parameter. In this manner, collaboration between the first functional entity and the plurality of second functional entities can be improved, and a success rate of model training can be improved. In addition, model training efficiency can be further improved by using the foregoing distributed training method.

FIG. 6 shows another model training method according to an embodiment of this application. The method 600 may be applied to the system architectures shown in (a) and (d) in FIG. 1. The method 600 may be a specific description of step S301 to step S302 in the method 300. The method 600 may include the following steps.

S601. An access network device sends a dataset #1 to an MIF.

The dataset #1 may be used by the MIF to perform model training, verification, and testing. The access network device may be the second functional entity in the method 300, and the MIF may be the first functional entity in the method 300.

Optionally, a manner in which the access network device obtains the dataset #1 may include: collecting, by the access network device, data online to obtain a dataset; generating, by a network management system, a core network, or an external server, a dataset and sending the dataset to the access network device; and sending, by the access network device, a dataset generated through simulation in a lab and sending the dataset to the access network device.

S602. The MIF performs initial model training based on the dataset #1.

The initial model may be the second model in the method 300.

S603. The MIF feeds back the initial model to the access network device.

Optionally, after receiving the initial model, the access network device may perform inference by using the model.

Optionally, in the method 600, step S604 may be directly performed without performing steps S601 to S603.

S604. The access network device sends the model training requirement information to the MIF.

For example, the model training requirement information may include at least one of the following content:: a maximum value of time used for model training, a volume of data used for model training, a maximum value of a volume of data used for model training, a minimum value of a volume of data used for model training, or a model performance threshold.

The maximum value of the time used for model training may be used to indicate a maximum value of a time used by the MIF to perform model training (corresponding to step S608), or a maximum interval between a time when the MIF receives the dataset #2 (corresponding to step S607) and a time when the MIF sends the model to the access network device (corresponding to step S609). The model performance threshold may be used to indicate a performance threshold for performance of the trained model.

Optionally, a time used for training the model by using the MIF (corresponding to step S608) may be less than or equal to a maximum value of the time used for model training, a data volume used for training the model by using the MIF may be less than or equal to a data volume used for model training, and a data volume used for training the model by using the MIF may be greater than a minimum value of the data volume used for model training. Performance of the MIF training model may meet a model performance threshold. If the model performance threshold is a minimum value, the performance of the training model may be greater than or equal to the threshold. If the model performance threshold is a maximum value, the training performance of the model may be less than or equal to the threshold.

Optionally, the model performance threshold may include at least one of the following content: a maximum value and/or a minimum value of accuracy (accuracy), a maximum value and/or a minimum value of precision (precision), a maximum value and/or a minimum value of recall (recall), a maximum value and/or a minimum value of F1 score (F1 Score), a maximum value and/or a minimum value of recall (recall), a maximum value and/or a minimum value of mean absolute error (mean absolute error, MAE), and a maximum value and/or a minimum value of mean squared error (mean squared error, MSE), a maximum value and/or a minimum value of a root mean squared error (root mean square error, RMSE), a maximum value and/or a minimum value of a mean absolute percentage error (mean absolute percentage error, MAPE), and a maximum value and/or a minimum value of a cross entropy (Cross-entropy).

S605. The MIF sends a requirement confirmation or requirement change information to the access network device.

Specifically, the MIF may send requirement confirmation information to the access network device, to confirm the model training requirement in step S605, or the MIF may send requirement change information to the access network device, to indicate a training capability that can be provided by the MIF.

Optionally, the requirement change information may include at least one of the following content: a maximum value of a time that can be provided for model training, a volume of data that can be provided for model training, a maximum value of a volume of data that can be provided for model training, a minimum value of a volume of data that can be provided for model training, or a model performance threshold that can be provided.

The maximum value of the model training time that may be provided may be corresponding to the maximum value of the model training time in step S604. For example, the maximum value of the model training time in step S604 is 1 second, and the MIF considers that the time requirement cannot be met, and should adjust the maximum value to 2 seconds. In this case, in the requirement change information, a value of the maximum value of the model training time may be 2 seconds.

A data volume that may be provided and that is used for model training may be corresponding to the data volume used for model training in step S604. For example, a value of the data volume used for model training in step S604 is 1000, and the MIF considers that the quantity requirement cannot be met, and the data volume should be adjusted to 2000. In this case, a maximum value of the data volume required for model training in the requirement change information may be 2000.

A maximum value that can be provided and that is of a data volume required for model training may be corresponding to a maximum value of a data volume used for model training in step S604. For example, a maximum value of the data volume used for model training in step S604 is 1000, and the MIF considers that the data volume requirement cannot be met, and needs to be adjusted to 2000. In this case, a maximum value of the data volume required for model training in step S605 is 2000.

A minimum value that may be provided and that is of a data volume required for model training may be corresponding to a minimum value of a data volume used for model training in step S604. For example, in step S604, a minimum value of the data volume used for model training is 1000, and the MIF considers that the quantity requirement cannot be met, but needs to adjust the data volume to 600. In this case, a minimum value of the data volume required for model training in step S605 is 600.

The model performance threshold that can be provided may correspond to the model performance threshold in step S604. For example, in step S604, the model performance threshold "indicates that the minimum value of the model accuracy is 95%, and the MIF considers that the performance requirement cannot be met, but needs to adjust the foregoing performance indicator to 90%. Therefore, the model performance threshold that can be provided in step S605 indicates that the minimum value of the model accuracy is 90%.

S606. The access network device performs data collection.

Specifically, the data collected by the access network device may be used by the MIF to perform model training, verification, and testing.

Optionally, a manner of collecting data by the access network device may include: collecting, by the access network device, data online; generating, by a network management system, a core network, or an external server, the data and sending the data to the access network device; and generating, by means of simulation in a lab, the data and sending the data to the access network device.

S607. The access network device sends dataset #2 to the MIF.

The dataset #2 may be the data collected by the access network device in step S606, and the dataset #2 may be the first dataset in the method 300.

S608. The MIF performs model training.

When the MIF performs model training, the indicators determined in step S604 and step S605 need to be complied with.

For example, in step S604, the access network device requires that a maximum model training time be one second, and (step S605) the MIF does not indicate a maximum value of a model training time that can be provided. In this case, the MIF may complete training within one second.

For another example, in step S604, the access network device requires that a maximum model training time be 1 second, and (step S605) the MIF indicates that a maximum model training time that can be provided is 2 seconds. In this case, the MIF should complete training within 2 seconds.

S609. The MIF sends the model to the access network device.

Specifically, if the MIF completes model training in step S608, the MIF may send the trained model to the access network device. The trained model may be the first model in the method 300.

Optionally, if the MIF cannot complete model training in step S608, for example, the MIF cannot complete training within a specified time, or the model trained by the MIF does not meet a specified model training threshold, the MIF may send training failure indication information to the access network device, to indicate that the model training fails. The failure indication information may be the first information in the method 300.

Optionally, the training failure indication information may include a failure cause value, and the failure cause value may be used to indicate at least one of the following: training timeout, insufficient training samples, and model performance failing to meet a requirement.

After receiving the failure cause value, the access network device may perform different processing.

For example, if the failure cause value is training timeout, the access network device may loosen a constraint on a model training time when sending the model training request to the MIF in a subsequent procedure.

For another example, if the failure cause value is that the model training performance does not meet the requirement, the access network device may subsequently collect more data for model training, or the access network device may abandon using the model and use another algorithm (for example, an optimization algorithm).

In this embodiment of this application, the access network device and the MIF may determine the indicator for model training through negotiation, so that the MIF can determine a training requirement of the model in time, thereby better allocating resources for model training, and ensuring that the model training meets a user requirement.

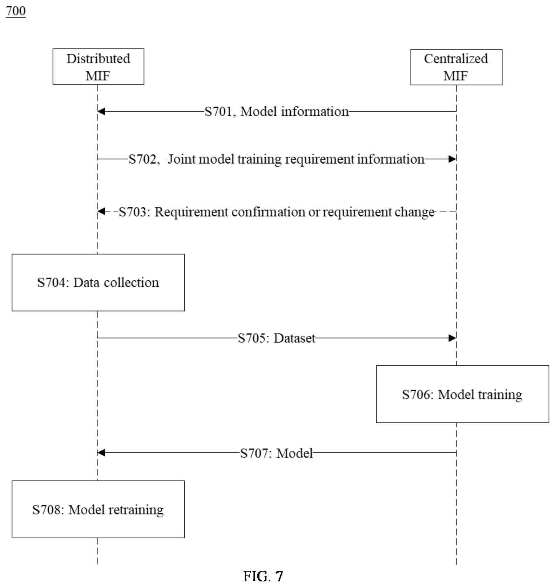

FIG. 7 shows another model training method according to an embodiment of this application. The method 700 may be applied to the system architectures shown in (b) and (e) in FIG. 1. The method 700 may be a specific description of steps S301 to S302 in the method 300. The method 700 may include the following steps.

S701. A centralized MIF sends model information to a distributed MIF.

The centralized MIF may be the first functional entity in the method 300, and the distributed MIF may be the second functional entity in the method 300.

The model information may include information about a model structure, and the information about the model structure may include at least one of the following content: a quantity of model layers, a quantity of model input dimensions, or a quantity of model output dimensions.

Optionally, the model information may include a model identifier, and the model identifier may be an integer (for example, 0001) or a character string (for example, model A).

S702. The distributed MIF sends joint model training requirement information to the centralized MIF.

For example, the joint model training requirement information may be used to indicate a requirement for performing model training on the centralized MIF, and may specifically include at least one of the following content: information about a quantity of model layers that need to be trained, a data volume used for model training, a maximum value of a data volume used for model training, a minimum value of a data volume used for model training, or a model performance threshold. The joint model training requirement information may be the model training requirement information in the method 300.

The information about the quantity of model layers that need to be trained may be used to indicate layers of a model that need to be trained in the centralized MIF. The information may be an integer N, indicating the first N layers or the last N layers of the model that need to be trained. Alternatively, the information may be two integers M and N (M < N), indicating the Mth layer to the Nth layer of the model that need to be trained. Alternatively, the information may be an index. The index is corresponding to an item in a predefined or preconfigured table (predefinition may be predefined in a protocol, and preconfiguration may be pre-configuration performed by a network management system or a network device on a centralized MIF and a distributed MIF). Content of the item indicates a layer of a model that needs to be trained.

The data volume used for model training may be used to indicate a data volume used by the centralized MIF for model training. The maximum value of the model training time may be used to indicate a maximum value of the data volume used by the MIF for model training. The minimum value of the data volume used for model training may be used to indicate a minimum value of the data volume used by the centralized MIF for model training. The model performance threshold may be used to indicate a threshold for performance of the model trained by the centralized MIF.

Optionally, the model performance threshold may include at least one of the following content: a maximum value and/or a minimum value of accuracy, a maximum value and/or a minimum value of accuracy, a maximum value and/or a minimum value of recall, a maximum value and/or a minimum value of F1 scores, a maximum value and/or a minimum value of recall, a maximum value and/or a minimum value of mean absolute errors, a maximum value and/or a minimum value of mean squared errors, a maximum value and/or a minimum value of mean absolute percentage errors, and/or a maximum value of cross entropy.

S703. The centralized MIF sends a request confirmation or request change information to the distributed MIF.

Step S703 is an optional step. In the method 700, step S703 may not be performed, and step S704 may be directly performed.

Specifically, the centralized MIF may send acknowledgment information to the distributed MIF, to confirm the requirement in step S702, or the centralized MIF may send request change information to the distributed MIF, to instruct to change a model training requirement or indicate a training capability that can be provided by the centralized MIF.

Optionally, the requirement change information may include at least one of the following content: information about a quantity of model layers that can be trained, a data volume that can be provided and that is required for model training, a maximum value of a data volume that can be provided and that is required for model training, a minimum value of a data volume that can be provided and that is required for model training, or a model performance threshold that can be provided.

The information about the quantity of model layers that can be trained may be corresponding to the information about the quantity of model layers that need to be trained in step S702. For example, the information about the quantity of model layers that need to be trained in step S702 is an integer 5 (indicating that the first five layers of the model need to be trained by the centralized MIF), and the centralized MIF considers that the requirement cannot be met, and the foregoing value needs to be adjusted to 3 (indicating that the first three layers of the model can be trained by the centralized MIF). In this case, a value of the information about the quantity of model layers that can be trained in step S703 may be 3.

A data volume that can be provided and that is used for model training may be corresponding to the data volume used for model training in step S702. For example, a value of the data volume used for model training in step S702 is 1000, and the centralized MIF considers that the data volume requirement cannot be met, and the data volume should be adjusted to 2000. In this case, the value of the data volume required for model training in step S703 is 2000.

A maximum value that can be provided and that is of a data volume required for model training may be corresponding to a maximum value of a data volume used for model training in step S702. For example, in step S702, a maximum value of the data volume used for model training is 1000, and the centralized MIF considers that the data volume requirement cannot be met, but needs to be adjusted to 2000. In this case, a maximum value of the data volume required for model training in step S703 is 2000.

A minimum value that may be provided and that is of a data volume required for model training may be corresponding to a minimum value of a data volume used for model training in step S702. For example, in step S702, a minimum value of the data volume used for model training is 1000, and the centralized MIF considers that the data volume requirement cannot be met, but needs to be adjusted to 700. In this case, a minimum value of the data volume required for model training in step S703 is 700.

The model performance threshold that can be provided may correspond to the model performance threshold in step S702. For example, in step S702, the model performance threshold indicates that the minimum model accuracy value is 95%, and the centralized MIF considers that the performance requirement cannot be met, but the foregoing performance indicator needs to be adjusted to 90%. In this case, the model performance threshold that can be provided in step S703 indicates that the minimum model accuracy value is 90%.

S704. The distributed MIF performs data collection.

Specifically, the data is used by the centralized MIF to perform model training, verification, and testing.

Optionally, a manner of obtaining data by the distributed MIF may include at least one of the following content: The distributed MIF collects data online; the network device, the network management system, or the external server generates data and sends the data to the distributed MIF; or the lab simulates to generate data and sends the data to the distributed MIF.

S705. The distributed MIF sends a dataset to the centralized MIF.

Specifically, the dataset may be the dataset obtained by the distributed MIF by means of data collection in step S704, and the dataset may be the first dataset in the method 300.

S707. The centralized MIF performs model training.

Optionally, when performing model training, the centralized MIF may comply with the indicators determined in step S702 and step S703.

For example, in step S702, the distributed MIF requires that the quantity of model layers that need to be trained is 5, and in step S703, the centralized MIF does not indicate information about a quantity of model layers that can be trained. In this case, in step S706, the centralized MIF may train the first five layers of the model.

For another example, in step S702, a quantity of model layers that need to be trained and that are required by the distributed MIF is 5, but in step S703, the centralized MIF indicates that information about a quantity of model layers that can be trained is 3, and in step S706, the centralized MIF may train the first three layers of the model.

S707. The centralized MIF sends the model to the distributed MIF.

Specifically, if the centralized MIF completes model training in step S706, in step S707, the centralized MIF may send the trained model to the distributed MIF, and the trained model may be the first model in the method 300.

Alternatively, if the model training fails in step S706, in step S707, the centralized MIF may send training failure indication information to the distributed MIF, to indicate that the model training fails.

Optionally, the model training failure indication information may include a failure cause value, and the failure cause value may be used to indicate at least one of the following content: training timeout, insufficient training samples, or model performance not meeting a requirement.

The distributed MIF may perform different processing after receiving the failure cause value.

For example, if the failure cause value is insufficient computing power, the distributed MIF may reduce a quantity of layers that need to be trained by the centralized MIF when subsequently sending the joint model training requirement to the centralized MIF.

For another example, if the failure cause value is that the model performance does not meet the requirement, the distributed MIF may collect more data for model training.

S708. The distributed MIF performs model retraining.

Specifically, after receiving the model sent by the centralized MIF, the distributed MIF may retrain the model.

Optionally, the model retraining may include: training another layer of the model, or training the model by using a new dataset, where the distributed MIF may train the model to obtain the third model in the method 300.

In this embodiment of this application, the distributed MIF and the centralized MIF may negotiate to determine the model joint training indicator, so that the centralized MIF can determine a requirement for performing model training by the centralized MIF, to better allocate resources for model training, to ensure that the model training meets the requirement.

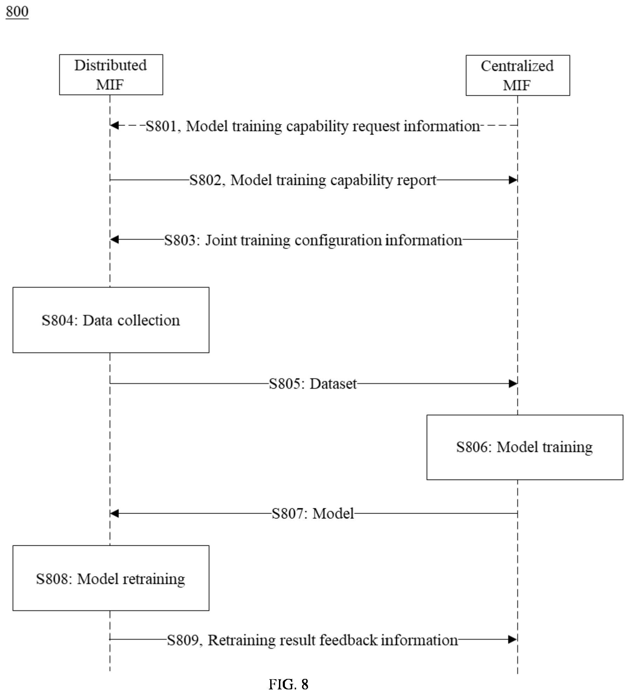

FIG. 8 shows another model training method according to an embodiment of this application. The method 800 may be applied to the system architectures shown in (b) and (e) in FIG. 1. The method 800 may specifically describe steps S401 to S403 in the method 400. The method 800 may include the following steps.

S801. A centralized MIF sends model training capability request information to a distributed MIF.

Step S801 is an optional step, that is, step S801 may not be performed in the method 800, and step S802 is directly performed.

Specifically, the model training capability request information may be used to request the distributed MIF to report capability information of model training. The centralized MIF may be the first functional entity in the method 400, and the distributed MIF may be the second functional entity in the method 400.

Optionally, the model training capability request information may include at least one of the following content:: a computing power headroom indication, a memory headroom indication, a video memory headroom indication, or a video memory bandwidth indication.

The computing power headroom indication may be used to request to report a computing power headroom. The indication may be specific to a data type. For example, the indication is used to request a computing power headroom for 32-bit floating-point data (32-bit floating-point, FP32), or the indication is used to request a computing power headroom for 16-bit integer data (16-bit integer, INT16). Units of the "computing power" and the "computing power headroom" may be: a quantity of floating-point operations performed per second (floating-point operations per second, FLOPS), a total quantity of operations performed per second (trillions of operations per second, TOPS), or the like.

The memory headroom indication may be used to indicate that the memory headroom is requested to be reported. A unit of the "memory" and the "memory headroom" may be a gigabyte (giga byte, GB), or the like.

The video memory headroom indication may be used to request to report the video memory headroom. A unit of the "video memory" and the "video memory headroom" may be a gigabyte (giga byte, GB), or the like.

The video memory bandwidth indication may be used to request to report the video memory bandwidth, and a unit of the video memory bandwidth " may be: terabytes per second (tera byte per second, TB/s), or the like.

S802. The distributed MIF sends a model training capability report to the centralized MIF.

Specifically, the model training capability report may be used to indicate model training capability information of the distributed MIF, that is, the model training capability report may be the model training capability information in the method 400.

Optionally, the model training capability information may include at least one of the following content used to indicate the distributed MIF: a computing power headroom, a memory headroom, a video memory headroom, or video memory bandwidth.

The computing power headroom may be used to indicate a current computing power headroom of the distributed MIF or a computing power that can be currently provided by the distributed MIF. The unit can be FLOPS or TOPS. The computing power headroom may be specific to a given data type, for example, a computing power headroom for an FP32, or a computing power headroom for an INT16.

The memory headroom may be used to indicate a size of a memory that can be currently provided by the distributed MIF, and a unit may be GB or the like.

The video memory headroom may be used to indicate a current video memory headroom of the distributed MIF, or a size of a video memory that can be currently provided by the distributed MIF, and a unit may be GB or the like.

The video memory bandwidth may be used to indicate a video memory bandwidth that can be currently provided by the distributed MIF, and a unit may be TB/s or the like.

S803: The centralized MIF sends joint training configuration information to the distributed MIF.

Specifically, the joint model training configuration information may be used to indicate a requirement for performing model training by the distributed MIF, that is, the joint training configuration information may be the model training requirement information in the method 400.

For example, the joint training configuration information may include at least one of the following content: a model identifier, structure information of a model, information about a quantity of model layers that need to be trained, a data volume used for model training, a maximum value of a data volume used for model training, a minimum value of a data volume used for model training, or a model performance threshold.

The model identifier may be an integer (for example, 0001) or a character string (for example, model A).

The information about the model structure may include at least one of the following content: a quantity of model layers, a quantity of model input dimensions, or a quantity of model output dimensions.

The information about the quantity of model layers that need to be trained may be used to indicate layers of the model that need to be trained in the distributed MIF. The information may be an integer N, indicating the first N layers or the last N layers of the model that need to be trained. Alternatively, the information may be two integers M and N (M < N), indicating the Mth layer to the Nth layer of the model that need to be trained. Alternatively, the information may be an index. The index is corresponding to an item in a predefined or preconfigured table (predefinition may be predefined in a protocol, and preconfiguration may be pre-configuration performed by a network management system or a network device on a centralized MIF and a distributed MIF). Content of the item indicates a layer of a model that needs to be trained.

The data volume used for model training may be used to indicate a data volume used by the centralized MIF for model training. The maximum value of the model training time may be used to indicate a maximum value of the data volume used by the MIF for model training. The minimum value of the data volume used for model training may be used to indicate a minimum value of the data volume used by the centralized MIF for model training. The model performance threshold may be used to indicate a threshold for performance of the model trained by the centralized MIF.

Optionally, the model performance threshold may include at least one of the following content: a maximum value and/or a minimum value of accuracy, a maximum value and/or a minimum value of accuracy, a maximum value and/or a minimum value of recall, a maximum value and/or a minimum value of F1 scores, a maximum value and/or a minimum value of recall, a maximum value and/or a minimum value of mean absolute errors, a maximum value and/or a minimum value of mean squared errors, a maximum value and/or a minimum value of mean absolute percentage errors, and/or a maximum value of cross entropy.

S804. The distributed MIF performs data collection.

Optionally, a manner of obtaining data by the distributed MIF may include at least one of the following content: the distributed MIF collects data online; the network device, the network management system, or the external server generates data and sends the data to the distributed MIF; and the lab simulates to generate data and sends the data to the distributed MIF.

S805. The distributed MIF sends a dataset to the centralized MIF.

Specifically, the dataset may be the dataset obtained by the distributed MIF by means of data collection in step S805, and the dataset may be the first dataset in the method 400.

S806. The centralized MIF performs model training according to the received dataset.

S807. The centralized MIF sends the trained model to the distributed MIF.

The trained model may be the second model in the method 400.

S808. The distributed MIF performs model retraining.

Optionally, when the distributed MIF performs model retraining, the indicator determined in step S803 may be complied with, and a model retraining result of the distributed MIF may be the first model in the method 400.

S809. The distributed MIF sends retraining result feedback information to the centralized MIF.

Step S803 may be an optional step, that is, step S809 may not be performed in the method 800.

Specifically, if the distributed MIF completes model retraining in step S808, the training result feedback information may include a model training completion indication, used to indicate that the model retraining is completed. If the distributed MIF fails to complete model training in step S808, the training result feedback information may include a failure cause value, and the failure cause value may be used to indicate at least one of the following content: training timeout, insufficient training samples, or model performance not meeting a requirement.

The centralized MIF may perform different processing after receiving the failure cause value.

For example, if the failure cause value is insufficient computing power, the centralized MIF may reduce, when subsequently allocating a training task, a quantity of model layers that need to be trained in a distributed manner.

In this embodiment of this application, the centralized MIF may learn of a model training capability of the distributed MIF, so as to more accurately allocate a joint training task, to meet a requirement of model training of a user.

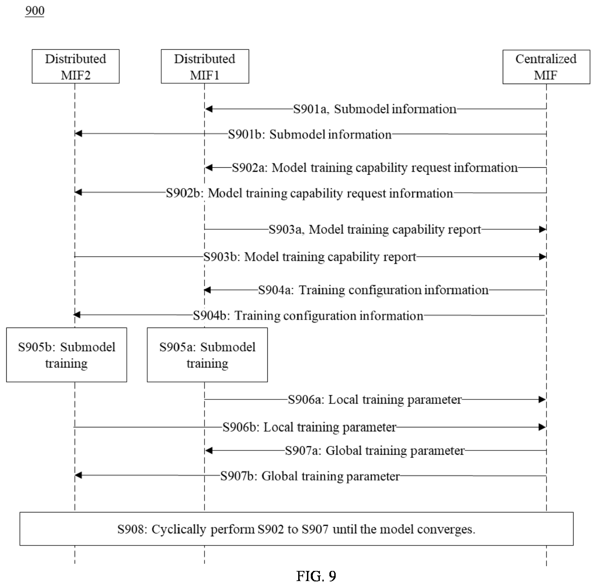

FIG. 9 shows another model training method according to an embodiment of this application. The method 900 may be applied to the system architecture shown in (c) and (f) in FIG. 1. The method 900 may be a specific description of steps S501 to S505 in the method 500. The method 900 may include the following steps.

S901. The centralized MIF sends submodel information to the distributed MIF 1 and the distributed MIF 2.

Step S901 may include two sub-steps, that is, S901a and S901b.

The centralized MIF may be the first functional entity in the method 500, and the multiple second functional entities in the method 500 may include MIF 1 and MIF 2.

For example, the sub-model information may include information about a model structure. The information about the model structure may include at least one of the following content: a quantity of model layers, a quantity of model input dimensions, or a quantity of model output dimensions. The sub-model information may correspond to the first model in the method 500.

Optionally, the submodel information may include a model identifier, and the model identifier may be an integer (for example, 0001) or a character string (for example, model A).

Optionally, the submodel information sent by the centralized MIF to the distributed MIF 1 and the distributed MIF 2 may be the same or may be different.

S902. The centralized MIF sends model training capability request information to the distributed MIF 1 and the distributed MIF 2.

Step S902 may include two substeps: S902a and S902b. The model training capability request information may be used to request the MIF 1 and the MIF 2 to report their own model training capabilities.

Optionally, the model training capability request information may include at least one of the following content: a indication of an estimated value of time for a single round of training, a computing power headroom indication, a memory headroom indication, a video memory headroom indication, or a video memory bandwidth indication.

The computing power headroom indication may be used to request to report a computing power headroom. The indication may be specific to a data type. For example, the indication is used to request a computing power headroom for an FP32, or the indication is used to request a computing power headroom for an INT16. Units of the "computing power" and the "computing power headroom" may be: FLOPS or TOPS.

The memory headroom indication may be used to indicate that a report of memory headroom is requested, and a unit of the "memory" and the "memory headroom" may be GB or the like.

The video memory headroom indication may be used to request to report the video memory headroom, and units of the "video memory" and the "video memory headroom" may be: GB and so on.

The video memory bandwidth indication may be used to request to report the video memory bandwidth, and a unit of the video memory bandwidth may be: terabytes per second TB/s, or the like.

Optionally, content included in the model training capability request information sent by the centralized MIF to the distributed MIF 1 and the distributed MIF 2 may be the same or may be different.

For example, the model training capability request information sent by the centralized MIF to the distributed MIF 1 and the distributed MIF 2 includes a memory headroom, and values of the memory headrooms are the same.

For another example, the model training capability request information sent by the centralized MIF to the distributed MIF 1 and the distributed MIF 2 includes a memory headroom, and values of the memory headrooms are different.

S903. The distributed MIF 1 and the distributed MIF 2 send model training capability reports to the centralized MIF.

Step S903 may include two sub-steps, that is, S903a and S903b.

The model training capability report may be used to indicate model training capability information of each distributed MIF, that is, the model training capability report may be the model training capability information in the method 500.

Model training information of each distributed MIF may include same or different content.

Optionally, the model training capability may include at least one of the following content: an estimated value of time for a single round of training, a computing power headroom, a memory headroom, a video memory headroom, or video memory bandwidth.

The estimated computing power training time value may be used to indicate a time required by each MIF to perform single-round training. The estimated computing power training time value may be used to avoid a case in which an overall training time of a model times out because a time for a single round of training is excessively long due to an excessively long time of some distributed MIF training.

The computing power headroom may be used to indicate a current computing power headroom of the distributed MIF or a computing power that can be currently provided by the distributed MIF. The unit can be FLOPS or TOPS. The computing power headroom may be specific to a given data type, for example, a computing power headroom for an FP32, or a computing power headroom for an INT16.

The memory headroom may be used to indicate a size of a memory that can be currently provided by the distributed MIF, and a unit may be GB or the like.

The video memory headroom may be used to indicate a current video memory headroom of the distributed MIF, or a size of a video memory that can be currently provided by the distributed MIF, and a unit may be GB or the like.

The video memory bandwidth may be used to indicate a video memory bandwidth that can be currently provided by the distributed MIF, and a unit may be TB/s or the like.

S904. The centralized MIF sends training configuration information to the distributed MIF 1 and the distributed MIF 2.

Step S904 may include two sub-steps, that is, S904a and S904b.

Specifically, the configuration information may be used to indicate a training requirement for performing model training on the distributed MIF, that is, the training configuration information may be the model training requirement information in the method 500. Content specifically included in the configuration information sent by the centralized MIF to the distributed MIF 1 and the distributed MIF 2 may be the same or may be different.

Optionally, the training configuration information may include at least one of the following content: a maximum value of time for a single round of training, a data volume used for model training, a maximum value of a data volume used for model training, a minimum value of a data volume used for model training, or a model performance threshold.

The maximum value of time for a single round of training may be used to indicate a maximum value of time used by the distributed MIF to complete single-round training. The data volume used for model training may be used to indicate a data volume used by the distributed MIF for model training. The maximum value of the model training time may be used to indicate a maximum value of a data volume used by the distributed MIF for model training. The minimum value of the data volume used for model training may be used to indicate a minimum value of the data volume used by the distributed MIF for model training. The model performance threshold may be used to indicate a threshold for model training.

Optionally, the model performance threshold may include at least one of the following: a maximum value and/or a minimum value of accuracy, a maximum value and/or a minimum value of accuracy, a maximum value and/or a minimum value of recall, a maximum value and/or a minimum value of F1 scores, a maximum value and/or a minimum value of recall, a maximum value and/or a minimum value of mean absolute errors, a maximum value and/or a minimum value of mean squared errors, a maximum value and/or a minimum value of mean absolute percentage errors, and/or a maximum value of cross entropy.

S905. The distributed MIF 1 and the distributed MIF 2 separately perform sub-model training.

Step S905 may include two sub-steps, that is, S905a and S905b.

Optionally, when the distributed MIF 1 and the distributed MIF 2 perform model training, the indicator determined in step S904 may be complied with.

S906. The distributed MIF 1 and MIF 2 send local training parameters to the centralized MIF, where the local training parameter may correspond to the first model training parameter in the method 500.

Step S906 may include two sub-steps, that is, S906a and S906b.

Optionally, the local training parameter may also be referred to as a local training result. The local training result may include a gradient value. Content and values of the local training parameters sent by the MIF 1 and the MIF 2 to the centralized MIF may be the same or may be different.

S907. The centralized MIF sends a global training parameter to the distributed MIF 1 and the distributed MIF 2.

Step S907 may include two sub-steps, that is, S907a and S907b.

Specifically, the centralized MIF updates the global training parameter according to the local training parameters sent by MIF 1 and MIF 2, and sends the global training parameter to MIF 1 and MIF 2.

S908. Cyclically perform steps S901 to S908 until the model converges.

It should be understood that, in the method 900, an example in which the distributed MIFs are MIF 1 and MIF 2 is used for description. The method 900 is also applicable to a case in which the distributed MIFs are a plurality of MIFs. When the distributed MIFs are a plurality of MIFs, a case in which the centralized MIF interacts with the plurality of distributed MIFs is basically the same as descriptions of steps in the method 900.

In this embodiment of this application, the centralized MIF may coordinate a model training time of each round when the distributed MIF performs model training, to ensure fast convergence of model training of the distributed MIF, so as to meet a requirement of model training of a user.

An embodiment of this application further provides an apparatus configured to implement any one of the foregoing methods. The apparatus includes units configured to implement steps in any one of the foregoing methods.

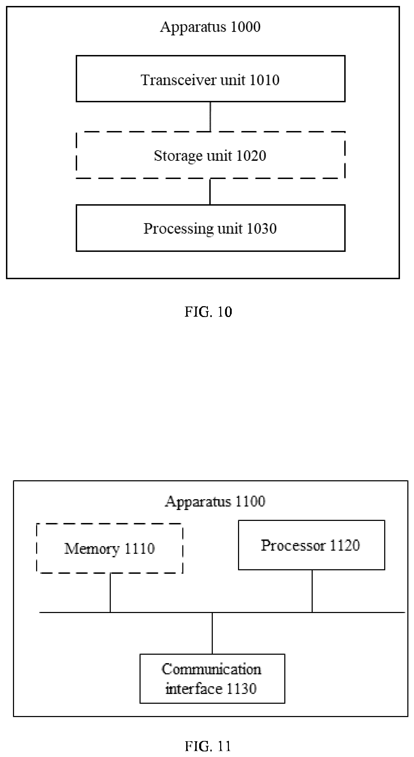

FIG. 10 is a diagram of a communication apparatus 1000 according to an embodiment of this application. The apparatus 1000 may include a transceiver unit 1010, a storage unit 1020, and a processing unit 1030. The transceiver unit 1010 is configured to receive or send an instruction and/or data. The transceiver unit 1010 may also be referred to as a communications interface or a communications unit. The storage unit 1020 is configured to implement a corresponding storage function, and store a corresponding instruction and/or data. The processing unit 1030 is configured to perform data processing, so that the apparatus 1000 implements the foregoing model training method.

In a possible implementation, the apparatus 1000 may include only the transceiver unit 1010 and the processing unit 1030, and does not include the storage unit 1020.

Optionally, the processing unit 1030 may be located in the model management function module in FIG. 2.

In a design, the apparatus 1000 may perform an action performed by the first functional entity in the foregoing method embodiment.

In an embodiment, the apparatus 1000 includes a transceiver unit 1010 and a processing unit 1030. The transceiver unit 1010 is configured to receive model training requirement information sent by a second functional entity, where the model training requirement information includes at least one piece of the following information: layer quantity information of model training, a maximum value of time used for model training, a data volume used for model training, a maximum value of a data volume used for model training, a minimum value of a data volume used for model training, or a performance threshold for model training. The processing unit 1030 is configured to perform model training based on the model training requirement information.

In a possible implementation, the transceiver unit 1010 is further configured to send first information to the second functional entity, where the first information indicates trained model information, or the first information indicates a model training failure.

In a possible implementation, the first information indicates trained model information, and the first information includes a first model.

In a possible implementation, the transceiver unit 1010 is specifically configured to receive a first dataset sent by a second functional entity; and the processing unit 1030 is configured to train the second model according to the first dataset and the model training requirement information, to obtain the first model.

In a possible implementation, the first information indicates a model training failure, the first information includes a failure cause value, and the failure cause value indicates at least one of the following content: insufficient computing power, insufficient training samples, or a trained model that does not meet a requirement.

In a possible implementation, the transceiver unit 1010 is further configured to send model training requirement information confirmation information to the second functional entity, where the model training requirement confirmation information indicates that the first functional entity confirms the model training requirement information.

In an embodiment, the apparatus 1000 includes a transceiver unit 1010 and a processing unit 1030. The processing unit 1030 is configured to determine model training requirement information, where the model training requirement information includes at least one piece of the following content: a model identifier, model structure information, layer quantity information of model training, a maximum value of time used for model training, a data volume used for model training, a maximum value of a data volume used for model training, a minimum value of a data volume used for model training, or a performance threshold for model training. The transceiver unit 1010 is configured to send model training requirement information to a second functional entity.

In a possible implementation, the transceiver unit 1010 is further configured to receive first information sent by the second functional entity, where the first information indicates trained model information, or the first information indicates a model training failure.

In a possible implementation, the first information indicates trained model information, and the first information includes the first model.

In a possible implementation, the transceiver unit 1010 is further configured to receive a first dataset sent by the second functional entity; the processing unit 1030 is further configured to perform model training according to the first dataset to obtain a second model, where the first model is obtained by training the second model according to the model training requirement information; and the transceiver unit 1010 is further configured to send the second model to the second functional entity.

In a possible implementation, the first information indicates a model training failure, the first information includes a failure cause value, and the failure cause value indicates at least one of the following content: insufficient computing power, insufficient training samples, or a trained model that does not meet a requirement.

In a possible implementation, the transceiver unit 1010 is further configured to receive model training capability information sent by the second functional entity, where the model training capability information indicates at least one of the following content corresponding to the second functional entity: a computing power headroom, a memory headroom, a video memory headroom, or video memory bandwidth; and the processing unit 1030 is specifically configured to determine the model training requirement information based on the model training capability information.

In an embodiment, the apparatus 1000 includes a transceiver unit 1010 and a processing unit 1030. The transceiver unit 1010 is configured to send model training requirement information to a plurality of second functional entities, where the model training requirement information includes at least one of the following content:: a maximum value of time for a single round of model training, a data volume used for model training, a maximum value of a data volume used for model training, a minimum value of a data volume used for model training, or a performance threshold for model training. receive a plurality of first model training parameters sent by a plurality of second functional entities, where the plurality of first model training parameters are obtained through training based on the plurality of first models; the processing unit 1030 is configured to determine a global model training parameter according to the plurality of first model training parameters; and the transceiver unit 1010 is further configured to send the global model training parameter to the plurality of second functional entities.

In a possible implementation, the transceiver unit 1010 is further configured to receive a plurality of pieces of model training capability information sent by the plurality of second functional entities, where the plurality of pieces of model training capability information indicates at least one of the following content corresponding to the plurality of second functional entities: a estimated value of time for a single round of training, a computing power headroom, a memory headroom, a video memory headroom, or video memory bandwidth; and the processing unit 1030 is further configured to send model training requirement information to the plurality of second functional entities based on the plurality of pieces of model training capability information.

In a possible implementation, the transceiver unit 1010 is further configured to send the plurality of first models to the plurality of second functional entities.

In a design, the apparatus 1000 may perform an action performed by the second functional entity in the foregoing method embodiment.

In an embodiment, the apparatus 1000 includes: a transceiver unit 1010 and a processing unit 1030, where the processing unit 1030 is configured to determine model training requirement information, where the model training requirement information includes at least one piece of the following information: layer quantity information of model training, a maximum value of time used for model training, a data volume used for model training, a maximum value of a data volume used for model training, a minimum value of a data volume used for model training, or a performance threshold for model training; and the transceiver unit 1010 is configured to send the model training requirement information to a first functional entity.

In a possible implementation, the transceiver unit 1010 is further configured to receive first information sent by the first functional entity, where the first information indicates trained model information, or the first information indicates a model training failure.

In a possible implementation, the first information indicates trained model information, and the first information includes a first model; and the processing unit 1030 is specifically configured to: obtain the first dataset; send the first dataset to the first functional entity; and train the first model based on the first dataset, to obtain the third model.

In a possible implementation, the first information indicates a model training failure, the first information includes a failure cause value, and the failure cause value indicates at least one of the following: insufficient computing power, insufficient training samples, or a trained model that does not meet a requirement.

In a possible implementation, the transceiver unit 1010 is further configured to receive model training requirement information confirmation information sent by the first functional entity, where the model training requirement confirmation information that the first functional entity confirms the model training requirement information.

In an embodiment, the apparatus 1000 includes a transceiver unit 1010 and a processing unit 1030. The transceiver unit 1010 is configured to receive model training requirement information sent by a first functional entity, where the model training requirement information includes at least one piece of the following information: a model identifier, model structure information, layer quantity information of model training, a maximum value of time used for model training, a data volume used for model training, a maximum value of a data volume used for model training, a minimum value of a data volume used for model training, or a performance threshold for model training. The processing unit 1030 is configured to perform model training based on the model training requirement information.

In a possible implementation, the transceiver unit 1010 is further configured to send first information to the first functional entity, where the first information indicates trained model information, or the first information indicates a model training failure.

In a possible implementation, the first information indicates trained model information, and the first information includes a first model.

In a possible implementation, the processing unit 1030 is further configured to obtain a first dataset; the transceiver unit 1010 is further configured to: send the first dataset to the first functional entity; and receive a second model sent by the first functional entity, where the second model is obtained by training based on the first dataset; and the processing unit 1030 is further configured to train the second model according to the first dataset and the model training requirement information, to obtain the first model.

In a possible implementation, the first information indicates a model training failure, the first information includes a failure cause value, and the failure cause value indicates at least one of the following content: insufficient computing power, insufficient training samples, or a trained model that does not meet a requirement.

In a possible implementation, the transceiver unit 1010 is further configured to send model training capability information to the first functional entity, where the model training capability information indicates at least one of the following content corresponding to the second functional entity: a computing power headroom, a memory headroom, a video memory headroom, or video memory bandwidth.

In an embodiment, the apparatus 1000 includes a transceiver unit 1010 and a processing unit 1030. The transceiver unit 1010 is configured to receive model training requirement information sent by a first functional entity, where the model training requirement information includes at least one of the following content: a maximum value of time for a single round of model training, a data volume used for model training, a maximum value of a data volume used for model training, a minimum value of a data volume used for model training, or a performance threshold for model training. The processing unit 1030 is configured to train a first model training parameter based on the model training requirement information. The transceiver unit 1010 is further configured to send the first model training parameter to the first functional entity.

In a possible implementation, the transceiver unit 1010 is further configured to send model training capability information to the first functional entity, where the model training capability information indicates at least one of the following content corresponding to the second functional entity: an estimated value of time for a single round of training, computing power headroom, memory headroom, video memory headroom, or video memory bandwidth.

In a possible implementation, the transceiver unit 1010 is further configured to receive the first model sent by the first functional entity.

FIG. 11 is a schematic diagram of another model training apparatus 1100 according to an embodiment of this application.

The apparatus 1100 includes a memory 1110, a processor 1120, and a communication interface 1130. The memory 1110, the processor 1120, and the communication interface 1130 are connected to each other through an internal connection path. The memory 1110 is configured to store instructions. The processor 1120 is configured to execute the instructions stored in the memory 1110, to control the communication interface 1130 to obtain information, or to cause the apparatus 1100 to perform the foregoing communication method. Optionally, the memory 1110 may be coupled to the processor 1120 through an interface, or may be integrated with the processor 1120.

It should be noted that the communication interface 1130 uses a transceiver apparatus, for example, but not limited to, a transceiver. The communication interface 1130 may further include an input/output interface (input/output interface).

The processor 1120 stores one or more computer programs. The one or more computer programs include instructions. When the instructions are run by the processor 1120, the apparatus 1100 is caused to perform the communication method in the foregoing embodiments.

In an implementation process, steps in the foregoing methods may be completed by a hardware integrated logical circuit in the processor 1120 or by using instructions in a form of software. The method of the communication disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory 1110. The processor 1120 reads information in the memory 1110 and completes the steps in the foregoing methods in combination with hardware of the processor. To avoid repetition, details are not described herein again.

In a possible implementation, the apparatus 1100 may include only the processor 1120 and the communications interface 1130, and does not include the memory 1110.

Optionally, the communication interface 1130 in FIG. 11 may implement the obtaining unit 1010 or the transceiver unit 1010 in FIG. 10. The processor 1120 in FIG. 11 may implement the processing unit 1030 in FIG. 10.

An embodiment of this application further provides a computer-readable storage medium. The computer-readable storage medium stores program code. When the computer program code is run on a computer, the computer is caused to perform any method in FIG. 3 to FIG. 9.

An embodiment of this application further provides a computer program product. The computer program product includes a computer program. When the computer program is run, a computer performs any one of the methods in FIG. 3 to FIG. 9.

An embodiment of this application further provides a chip, including a circuit. The circuit is configured to perform any one of the methods in FIG. 3 to FIG. 9.

An embodiment of this application further provides a system, including a first functional entity and a second functional entity. The first functional entity is configured to perform actions/steps performed by the first functional entity or the centralized MIF in FIG. 3 to FIG. 9. The second functional entity is configured to perform actions/steps performed by the second functional entity, the distributed MIF, or the access network device in FIG. 3 to FIG. 9.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model training method, applied to a first functional entity, wherein the method comprises:
receiving, model training requirement information sent by a second functional entity, wherein the model training requirement information comprises at least one of the following information: layer quantity information of model training, a maximum value of time used for model training, a data volume used for model training, a maximum value of the data volume used for model training, a minimum value of the data volume used for model training, or a performance threshold for model training;
performing model training based on the model training requirement information.

2. The method according to claim 1, wherein the method further comprises:
sending, to the second functional entity, first information, wherein the first information indicates information about a trained model, or the first information indicates a model training failure.

3. The method according to claim 2, wherein the first information indicates the information about the trained model, and the first information comprises a first model.

4. The method according to claim 3, wherein the performing model training based on the model training requirement information comprises:
receiving a first dataset sent by the second functional entity; and
training a second model based on the first dataset and the model training requirement information, to obtain the first model.

5. The method according to claim 2, wherein the first information indicates a model training failure, the first information comprises a failure cause value, and the failure cause value indicates at least one of the following content: insufficient computing power, insufficient training samples, or unsatisfactory performance of the trained model.

6. The method according to any one of claims 1 to 5, wherein before performing model training based on the model training requirement information, the method further comprises:
sending, to the second functional entity, model training requirement information confirmation information, wherein the model training requirement confirmation information indicates that the first functional entity confirms the model training requirement information.

7. A model training method, applied to a second functional entity, wherein the method comprises:
determining model training requirement information, wherein the model training requirement information comprises at least one of the following information: layer quantity information of model training, a maximum value of time used for model training, a data volume used for model training, a maximum value of the data volume used for model training, a minimum value of the data volume used for model training, or a performance threshold for model training; and
sending the model training requirement information to a first functional entity.

8. The method according to claim 7, wherein the method further comprises:
receiving first information sent by the first functional entity, wherein the first information indicates information about a trained model, or the first information indicates a model training failure.

9. The method according to claim 8, wherein the first information indicates the information about the trained model, and the first information comprises a first model;
before receiving the first information sent by the first functional entity, the method further comprises:
obtaining a first dataset; and
sending the first dataset to the first functional entity; and
the method further comprises:
training the first model based on the first dataset, to obtain a third model.

10. The method according to claim 8, wherein the first information indicates a model training failure, the first information comprises a failure cause value, and the failure cause value indicates at least one of the following content: insufficient computing power, insufficient training samples, or unsatisfactory performance of the trained model.

11. The method according to any one of claims 7 to 10, wherein the method further comprises:
receiving model training requirement information confirmation information sent by the first functional entity, wherein the model training requirement confirmation information indicates that the first functional entity confirms the model training requirement information.

12. A model training method, wherein the method is applied to a first functional entity, and the method comprises:
determining model training requirement information, wherein the model training requirement information comprises at least one of the following information: a model identifier, model structure information, layer quantity information of model training, a maximum value of time used for model training, a data volume used for model training, a maximum value of the data volume used for model training, a minimum value of the data volume used for model training, or a performance threshold for model training; and
sending the model training requirement information to a second functional entity.

13. The method according to claim 12, wherein the method further comprises:
receiving first information sent by the second functional entity, wherein the first information indicates information about a trained model, or the first information indicates a model training failure.

14. The method according to claim 13, wherein the first information indicates the information about the trained model, and the first information comprises a first model.

15. The method according to claim 14, wherein before receiving the first information sent by the second functional entity, the method further comprises:
receiving a first dataset sent by the second functional entity;
performing model training based on the first dataset, to obtain a second model, wherein the first model is obtained by training the second model based on the model training requirement information; and
sending the second model to the second functional entity.

16. The method according to claim 13, wherein the first information indicates a model training failure, the first information comprises a failure cause value, and the failure cause value indicates at least one of the following content: insufficient computing power, insufficient training samples, or unsatisfactory performance of the trained model.

17. The method according to any one of claims 12 to 16, wherein before determining the model training requirement information, the method further comprises:
receiving model training capability information sent by the second functional entity, wherein the model training capability information indicates at least one of the following content corresponding to the second functional entity: computing power headroom, memory headroom, video memory headroom, or a video memory bandwidth; and
determining the model training requirement information comprises:
determining the model training requirement information based on the model training capability information.

18. A model training method, wherein the method is applied to a second functional entity, and the method comprises:
receiving model training requirement information sent by a first functional entity, wherein the model training requirement information comprises at least one of the following information: a model identifier, model structure information, layer quantity information of model training, a maximum value of time used for model training, a data volume used for model training, a maximum value of the data volume used for model training, a minimum value of the data volume used for model training, or a performance threshold for model training; and
performing model training based on the model training requirement information.

19. The method according to claim 18, wherein the method further comprises:
sending first information to the first functional entity, wherein the first information indicates information about a trained model, or the first information indicates a model training failure.

20. The method according to claim 19, wherein the first information indicates the information about the trained model, and the first information comprises a first model.

21. The method according to claim 20, wherein performing model training based on the model training requirement information comprises:
obtaining a first dataset;
sending the first dataset to the first functional entity;
receiving a second model sent by the first functional entity, wherein the second model is obtained through training based on the first dataset; and
training the second model based on the first dataset and the model training requirement information, to obtain the first model.

22. The method according to claim 19, wherein the first information indicates a model training failure, the first information comprises a failure cause value, and the failure cause value indicates at least one of the following content: insufficient computing power, insufficient training samples, or unsatisfactory performance of the trained model.

23. The method according to any one of claims 18 to 22, wherein before receiving the model training requirement information, the method comprises:
sending model training capability information to the first functional entity, wherein the model training capability information indicates at least one of the following content corresponding to the second functional entity: computing power headroom, memory headroom, video memory headroom, or a video memory bandwidth.

24. A model training method, wherein the method is applied to a first functional entity, and the method comprises:
sending model training requirement information to a plurality of second functional entities, wherein the model training requirement information comprises at least one of the following content: a maximum value of time for a single round of model training, a data volume used for model training, a maximum value of the data volume used for model training, a minimum value of the data volume used for model training, or a performance threshold for model training;
receiving a plurality of first model training parameters sent by the plurality of second functional entities, wherein the plurality of first model training parameters are obtained through training based on a plurality of first models;
determining a global model training parameter based on the plurality of first model training parameters; and
sending the global model training parameter to the plurality of second functional entities.

25. The method according to claim 24, wherein before sending the model training requirement information to the plurality of second functional entities, the method further comprises:
receiving a plurality of pieces of model training capability information sent by the plurality of second functional entities, wherein the plurality of pieces of model training capability information indicate at least one of the following content corresponding to the plurality of second functional entities: an estimated value of time for a single round of training, computing power headroom, memory headroom, video memory headroom, or a video memory bandwidth; and
sending the model training requirement information to the plurality of second functional entities comprises:
sending the model training requirement information to the plurality of second functional entities based on the plurality of pieces of model training capability information.

26. The method according to claim 24 or 25, wherein before sending the model training requirement information to the plurality of second functional entities, the method comprises:
sending the plurality of first models to the plurality of second functional entities.

27. A model training method, wherein the method is applied to a second functional entity, and the method comprises:
receiving model training requirement information sent by a first functional entity, wherein the model training requirement information comprises at least one of the following content: a maximum value of time for a single round of model training, a data volume used for model training, a maximum value of the data volume used for model training, a minimum value of the data volume used for model training, or a performance threshold for model training;
training a first model based on the model training requirement information, to obtain a first model training parameter; and
sending the first model training parameter to the first functional entity.

28. The method according to claim 27, wherein the method further comprises:
sending model training capability information to the first functional entity, wherein the model training capability information indicates at least one of the following content corresponding to the second functional entity: an estimated value of time for a single round of training, computing power headroom, memory headroom, video memory headroom, or a video memory bandwidth.

29. The method according to claim 27 or 28, wherein before receiving the model training requirement information sent by the first functional entity, the method further comprises:
receiving the first model sent by the first functional entity.

30. A model training apparatus, wherein the apparatus is used in a first functional entity, and the apparatus comprises a transceiver unit and a processing unit, wherein
the transceiver unit is configured to receive model training requirement information sent by a second functional entity, wherein the model training requirement information comprises at least one of the following information: layer quantity information of model training, a maximum value of time used for model training, a data volume used for model training, a maximum value of the data volume used for model training, a minimum value of the data volume used for model training, or a performance threshold for model training; and
the processing unit is configured to perform model training based on the model training requirement information.

31. The apparatus according to claim 30, wherein the transceiver unit is further configured to send first information to the second functional entity, wherein the first information indicates information about a trained model, or the first information indicates a model training failure.

32. The apparatus according to claim 31, wherein the first information indicates the information about the trained model, and the first information comprises a first model.

33. The apparatus according to claim 32, wherein
the transceiver unit is specifically configured to receive a first dataset sent by the second functional entity; and
the processing unit is further configured to train a second model based on the first dataset and the model training requirement information, to obtain the first model.

34. The apparatus according to claim 31, wherein the first information indicates a model training failure, the first information comprises a failure cause value, and the failure cause value indicates at least one of the following content: insufficient computing power, insufficient training samples, or unsatisfactory performance of the trained model.

35. The apparatus according to any one of claims 30 to 34, wherein the transceiver unit is further configured to send model training requirement information confirmation information to the second functional entity, wherein the model training requirement confirmation information indicates that the first functional entity confirms the model training requirement information.

36. A model training apparatus, wherein the apparatus is used in a second functional entity, and the apparatus comprises a transceiver unit and a processing unit, wherein
the processing unit is configured to determine model training requirement information, wherein the model training requirement information comprises at least one of the following information: layer quantity information of model training, a maximum value of time used for model training, a data volume used for model training, a maximum value of the data volume used for model training, a minimum value of the data volume used for model training, or a performance threshold for model training; and
the transceiver unit is configured to send the model training requirement information to a first functional entity.

37. The apparatus according to claim 36, wherein the transceiver unit is further configured to receive first information sent by the first functional entity, wherein the first information indicates information about a trained model, or the first information indicates a model training failure.

38. The apparatus according to claim 37, wherein the first information indicates the information about the trained model, and the first information comprises a first model; and
the processing unit is specifically configured to:
obtain a first dataset;
send the first dataset to the first functional entity; and
train the first model based on the first dataset, to obtain a third model.

39. The apparatus according to claim 37, wherein the first information indicates a model training failure, the first information comprises a failure cause value, and the failure cause value indicates at least one of the following content: insufficient computing power, insufficient training samples, or unsatisfactory performance of the trained model.

40. The apparatus according to any one of claims 36 to 39, wherein the transceiver unit is further configured to receive model training requirement information confirmation information sent by the first functional entity, wherein the model training requirement confirmation information indicates that the first functional entity confirms the model training requirement information.

41. A model training apparatus, wherein the apparatus is used in a first functional entity, and the apparatus comprises a transceiver unit and a processing unit, wherein
the processing unit is configured to determine model training requirement information, wherein the model training requirement information comprises at least one of the following information: a model identifier, model structure information, layer quantity information of model training, a maximum value of time used for model training, a data volume used for model training, a maximum value of the data volume used for model training, a minimum value of the data volume used for model training, or a performance threshold for model training; and
the transceiver unit is configured to send the model training requirement information to a second functional entity.

42. The apparatus according to claim 41, wherein
the transceiver unit is further configured to receive first information sent by the second functional entity, wherein the first information indicates information about a trained model, or the first information indicates a model training failure.

43. The apparatus according to claim 42, wherein the first information indicates the information about the trained model, and the first information comprises a first model.

44. The apparatus according to claim 43, wherein
the transceiver unit is further configured to receive a first dataset sent by the second functional entity;
the processing unit is further configured to perform model training based on the first dataset, to obtain a second model, wherein the first model is obtained by training the second model based on the model training requirement information; and
the transceiver unit is further configured to send the second model to the second functional entity.

45. The apparatus according to claim 42, wherein the first information indicates a model training failure, the first information comprises a failure cause value, and the failure cause value indicates at least one of the following content: insufficient computing power, insufficient training samples, or unsatisfactory performance of the trained model.

46. The apparatus according to any one of claims 41 to 45, wherein
the transceiver unit is further configured to receive model training capability information sent by the second functional entity, wherein the model training capability information indicates at least one of the following content corresponding to the second functional entity: computing power headroom, memory headroom, video memory headroom, or a video memory bandwidth; and
the processing unit is specifically configured to determine the model training requirement information based on the model training capability information.

47. A model training apparatus, wherein the apparatus is used in a second functional entity, and the apparatus comprises a transceiver unit and a processing unit, wherein
the transceiver unit is configured to receive model training requirement information sent by a first functional entity, wherein the model training requirement information comprises at least one of the following information: a model identifier, model structure information, layer quantity information of model training, a maximum value of time used for model training, a data volume used for model training, a maximum value of the data volume used for model training, a minimum value of the data volume used for model training, or a performance threshold for model training; and
the processing unit is configured to perform model training based on the model training requirement information.

48. The apparatus according to claim 47, wherein the transceiver unit is further configured to send first information to the first functional entity, wherein the first information indicates information about a trained model, or the first information indicates a model training failure.

49. The apparatus according to claim 48, wherein the first information indicates the information about the trained model, and the first information comprises a first model.

50. The apparatus according to claim 49, wherein
the processing unit is further configured to obtain a first dataset;
the transceiver unit is further configured to: send the first dataset to the first functional entity; and
receive a second model sent by the first functional entity, wherein the second model is obtained through training based on the first dataset; and
the processing unit is further configured to train the second model based on the first dataset and the model training requirement information, to obtain the first model.

51. The apparatus according to claim 48, wherein the first information indicates a model training failure, the first information comprises a failure cause value, and the failure cause value indicates at least one of the following content: insufficient computing power, insufficient training samples, or unsatisfactory performance of the trained model.

52. The apparatus according to any one of claims 47 to 51, wherein
the transceiver unit is further configured to send model training capability information to the first functional entity, wherein the model training capability information indicates at least one of the following content corresponding to the second functional entity: computing power headroom, memory headroom, video memory headroom, or a video memory bandwidth.

53. A model training apparatus, wherein the apparatus is used in a first functional entity, and the apparatus comprises a transceiver unit and a processing unit, wherein
the transceiver unit is configured to:
send model training requirement information to a plurality of second functional entities, wherein the model training requirement information comprises at least one of the following content: a maximum value of time for a single round of model training, a data volume used for model training, a maximum value of the data volume used for model training, a minimum value of the data volume used for model training, or a performance threshold for model training; and
receive a plurality of first model training parameters sent by the plurality of second functional entities, wherein the plurality of first model training parameters are obtained through training based on a plurality of first models;
the processing unit is configured to determine a global model training parameter based on the plurality of first model training parameters; and
the transceiver unit is further configured to send the global model training parameter to the plurality of second functional entities.

54. The apparatus according to claim 53, wherein
the transceiver unit is further configured to receive a plurality of pieces of model training capability information sent by the plurality of second functional entities, wherein the plurality of pieces of model training capability information indicate at least one of the following content corresponding to the plurality of second functional entities: an estimated value of time for a single round of training, computing power headroom, memory headroom, video memory headroom, or a video memory bandwidth; and
the processing unit is further configured to send the model training requirement information to the plurality of second functional entities based on the plurality of pieces of model training capability information.

55. The apparatus according to claim 53 or 54, wherein the transceiver unit is further configured to send the plurality of first models to the plurality of second functional entities.

56. A model training apparatus, wherein the apparatus is used in a second functional entity, and the apparatus comprises a transceiver unit and a processing unit, wherein
the transceiver unit is configured to receive model training requirement information sent by a first functional entity, wherein the model training requirement information comprises at least one of the following content: a maximum value of time for a single round of model training, a data volume used for model training, a maximum value of the data volume used for model training, a minimum value of the data volume used for model training, or a performance threshold for model training;
the processing unit is configured to train a first model based on the model training requirement information, to obtain a first model training parameter; and
the transceiver unit is further configured to send the first model training parameter to the first functional entity.

57. The apparatus according to claim 56, wherein
the transceiver unit is further configured to send model training capability information to the first functional entity, wherein the model training capability information indicates at least one of the following content corresponding to the second functional entity: an estimated value of time for a single round of training, computing power headroom, memory headroom, video memory headroom, or a video memory bandwidth.

58. The apparatus according to claim 56 or 57, wherein
the transceiver unit is further configured to receive the first model sent by the first functional entity.

59. A model training apparatus, comprising a processor and a memory, wherein the processor is coupled to the memory, and is configured to read and execute instructions in the memory, to perform the method according to any one of claims 1 to 29.

60. A computer-readable storage medium, wherein the computer-readable storage medium stores program code; and when the computer program code is run on a computer, the computer is enabled to perform the method according to any one of claims 1 to 29.

61. A computer program product, wherein the computer product comprises a computer program; and when the computer program is run by a processor, the method according to any one of claims 1 to 29 is performed.

62. A chip, comprising a circuit, wherein the circuit is configured to perform the method according to any one of claims 1 to 29.

63. A system, comprising a first functional entity and a second functional entity, wherein the first functional entity is configured to perform the method according to any one of claims 1 to 6, 12 to 17, and 24 to 26, and the second functional entity is configured to perform the method according to any one of claims 7 to 11, 18 to 23, and 27 to 29.
